# EUROPÄISCHE PATENTANMELDUNG

(11) **EP 4 145 367 A1**
(43) Veröffentlichungstag der Anmeldung: **08.03.2023**
(21) Anmeldenummer: 22193698.2
(22) Anmeldetag: 02.09.2022
(51) Int. Cl.: G06Q 10/04, G06Q 50/04, G06Q 50/28

(54) **SYSTEM ZUR ÜBERWACHUNG EMITTIERTER TREIBHAUSGASEMISSIONEN**

(30) Priorität: 03.09.2021 DE 102021122849
(71) Anmelder: INRO Management GmbH, 63811 Stockstadt am Main (DE); First Row UG, 53113 Bonn (DE); Karl Joos GmbH, 76461 Muggensturm (DE)
(72) Erfinder: Kolkmann, Simon, 27305 Bruchhausen-Vilsen (DE); Westarp, Simon, 63741 Aschaffenburg (DE)
(74) Vertreter: Eisenführ Speiser

(57) **Zusammenfassung**

Die vorliegende Erfindung betrifft ein System zur Überwachung emittierter Treibhausgasemission mit einer Eingabeschnittstelle zum Erfassen von Produktdaten, wobei jedem erfassten Produkt ein individueller Produktemissionswert zugeordnet ist, der Produktemissionswert ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet und mit einer Verarbeitungseinheit eingerichtet zum Empfangen, Speichern und Verändern der erfassten Produkte und mit einer Berechnungseinheit zum Berechnen eines Emissionswertes eines Treibhausgasemittenten, die einen Emissionswert aus erfassten Produktdaten eines ausgewählten erfassten Produktes und aus bereitgestellten Emittentendaten eines ausgewählten Treibhausgasemittenten berechnet, wobei die Emittentendaten einen körperlichen Treibhausgasemittenten digital abbilden, und wobei die Verarbeitungseinheit dazu eingerichtet ist, den Produktemissionswert des ausgewählten Produktes mit dem berechneten Emissionswert zu aktualisieren, um einen individuellen und aktuellen Produktemissionswert für jedes erfasste Produkt bereitzustellen. Zudem betrifft die Erfindung ein Generatormodul zum Erzeugen und/oder Ausgeben eines individuellen Emissionsnachweises für ein ausgewähltes und erfasstes Produkt zur Überwachung emittierter Treibhausgasemission.

## Beschreibung

Die vorliegende Erfindung betrifft ein System zur Überwachung emittierter Treibhausgasemissionen. Zudem betrifft die vorliegende Erfindung ein Generatormodul zum Erzeugen und/oder Ausgeben eines individuellen Emissionsnachweises.

Weiterhin betrifft die Erfindung ein System zum Erstellen einer Schadstoffbilanz, dass es erlaubt dem Nutzer Ausgleichsmaßnahmen einzuleiten, um CO₂ Neutralität zu erreichen.

Systeme zum Berechnen von Treibhausgasemissionen sind grundsätzlich bekannt.

Solche Systeme sind auch als CO₂-Rechner, Klima-, Kohlenstoffdioxid-, CO₂-Äquivalenz-, Treibhausgas- oder Emissions-Rechner bekannt, die zumeist als Software ausgebildet sind und es wird mit diesen Rechnern in der Regel ein Gesamtwert eines emittierten CO₂-Ausstoßes über einen festgelegten Zeitraum bestimmt.

Beispielsweise ist es bekannt als Privatpersonen seinen jährlichen CO₂-Fußabdruck zu berechnen, um festzustellen wie viel CO₂ im Jahr verbraucht wurde.

Auch für Unternehmen und Institutionen sind solche Rechner bekannt. Mit diesen Rechnern soll die Auswirkung persönlichen Verhaltens oder institutioneller Prozesse auf die anthropogene Erderwärmung dargestellt und verdeutlicht werden.

Vorzugsweise erlaubt es dem Unternehmen weiterhin zu bestimmen, wie groß der CO₂ Ausgleich sein muss, um klimaneutral zu werden oder zu arbeiten.

Problematisch ist dabei, dass bei den bekannten CO₂-Rechnern in der Regel nur ein Gesamtwert für eine Person oder ein Unternehmen ausgegeben wird, aus dem wenig Informationen abgeleitet werden können.

Problematisch ist nämlich, dass die Auswertung der CO₂-Rechner zeitbasiert erfolgt, also eine Auswertung für einen Zeitraum bestimmt wird, also z.B. ein CO₂-Ausstoß des letzten Monats oder des letzten Jahres.

Damit eignen sich diese bekannten Systeme nicht, eine dauerhafte Überwachung von ausgestoßen Treibhausgasemissionen in nahezu Echtzeit zu realisieren.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der erzeugte Treibhausgasemissionen einfach, schnell, weitreichend und sicher überwacht werden können.

Vorzugsweise vergleicht die vorliegende Erfindung die erzeugten Treibhausemissionen mit den durchgeführten Maßnahmen zum CO₂ Ausgleich und weist den Nutzer darauf hin, dass die CO₂ Ausgleichsmaßnahmen von den Treibhausemissionen übertroffen werden und weist den Nutzer weiter darauf hin, dass weitere CO₂ Ausgleichmaßnahmen eingeleitet werden müssen.

Erfindungsgemäß wird dazu ein System zur Überwachung emittierter Treibhausgasemissionen gemäß Anspruch 1 vorgeschlagen. Das System zur Überwachung kann auch synonym als Überwachungssystem bezeichnet werden

Das vorgeschlagene System ist also dazu vorgesehen, dass damit emittierte, also erzeugte, Treibhausgasemissionen überwacht werden, wie z.B. Kohlenstoffdioxid CO₂, die von einem Treibhausgasemitteten erzeugt wurden, wie zum Beispiel eine Verarbeitungsanlage, die ein Produkt verarbeitet oder ein Transportmittel, das ein Produkt transportiert und beim Transport Treibhausgasemissionen ausstößt. Das Überwachungssystem ist also generell dazu vorgesehen, dass damit ein beliebiges Treibhausgas überwacht werden kann, wie beispielsweise die Treibhausgase des Kyoto-Protokolls, nämlich Kohlenstoffdioxid, Methan, Distickstoffmonoxid (Lachgas), Fluorkohlenwasserstoffe, Schwefelhexafluorid und/oder Stickstofftrifluorid. Das Überwachungssystem kann auch als Treibhausgasmonitor aufgefasst werden. Das System ist also unter anderem dazu vorgesehen, einen Istzustand emittierter Treibhausgasemissionen zu überwachen. Es bildet reale Treibhausgasemissionen ab. Aus diesem Istzustand können Rückschlüsse auf Einsparpotentiale erfolgen und Optimierungspotential bestimmt oder aufgezeigt werden, um weniger Treibhausgasemissionen zu erzeugen.

Das vorgeschlagene System kann zum Beispiel einen Prozessor, Eingabe- und Ausgabeschnittstellen und ein Speichermedium umfassen.

Das Überwachungssystem umfasst eine Eingabeschnittstelle zum Erfassen von Produktdaten eines körperlichen Produktes, um jedes körperliche Produkt individuell durch die Produktdaten als ein erfasstes Produkt digital abzubilden.

Vorzugsweise kann die Eingabeschnittstelle eine Tastatur, ein Touchscreen, eine Maus, oder eine beliebige Netzwerkschnittstelle wie auch eine Internetseite sein. Vorzugsweise kann die Eingabeschnittstelle eine Kombination des vorhergehenden sein. Vorzugsweise kann die Eingabeschnittstelle auch eine Schnittstelle zu einem Speichermedium sein, z.B. ein USB-Port, eine CD/DVD-Laufwerk oder dergleichen.

Die Eingabeschnittstelle ist also eine Schnittstelle über die Produktdaten in das Überwachungssystem gelangen und mit der die Produktdaten erfasst werden. Die Eingabeschnittstelle kann also auch als Datenschnittstelle zum Eingeben der Produktdaten aufgefasst werden. Die Eingabeschnittstelle kann beispielsweise als eine manuelle Eingabeschnittstelle ausgebildet sein, in die ein Nutzer des Überwachungssystems händisch in einer Eingabemaske die Produktdaten hinterlegt. Die Eingabeschnittstelle kann beispielsweise auch eine automatisiere Eingabeschnittstelle sein, in der die Eingabe der Produktdaten automatisiert erfolgt, oder eine Mischung aus manueller und automatisierter Eingabe sein. Die Produktdaten sind dazu vorgesehen, ein reales körperliches Produkt digital abzubilden, wie ein Rohmaterial, das verarbeitet oder transportiert wird. Ein Produkt kann aber auch ein Zwischen- oder Endprodukt sein, das verarbeitet oder transportiert wird. Ein körperliches Produkt ist ein gegenständliches Produkt, also ein Produkt, das vereinfacht ausgedrückt angefasst werden kann. Die Produktdaten beschreiben also das körperliche Produkt, beispielsweise dessen Menge, dessen Typ oder dessen Ablageort.

Es versteht sich, dass eine Person kein Produkt ist.

Zudem ist jedem erfassten Produkt ein individueller Produktemissionswert zugeordnet, der veränderbar ausgebildet ist, und der ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet.

Es wird also vorgeschlagen, dass jedem Produkt, das erfasst wurde, ein individueller und fester Wert zugeordnet ist bzw. wird, der produktbezogene emittierte Treibhausgasemissionen beschreibt. Der Produktemissionswert entspricht also einem produktbezogenen Summenwert oder Gesamtwert aller Treibhausgasemissionen, die bei der Verarbeitung oder beim Transport des jeweiligen erfassten Produktes erzeugt wurden. Der Produktemissionswert ist veränderlich ausgebildet, also beispielsweise durch eine Berechnungseinheit oder Verarbeitungseinheit automatisiert verändert wird oder durch eine manuelle Eingabe eines Nutzers, wenn dies zulässig ist. Es versteht sich, dass der Produktemissionswert zunehmen oder abnehmen kann, da er einem Summenwert entspricht. Wird ein Produkt beispielsweise verarbeitet, entstehen in der Regel positive Treibhausgasemissionen. Es ist aber auch möglich, Produkte mit negativen Treibhausgasemissionen in dem System zu erfassen, wie ein Produkt "Baum", das negative Treibhausgasemissionen bewirkt. Maßnahmen oder Produkte, die negative Treibhausgasemissionen hervorrufen, werden als Ausgleichsprodukte oder Ausgleichsmaßnahmen beschrieben.

Vorzugsweise überwacht das System die positiven Treibhausemissionen und die negativen Treibhausemissionen. Vorzugsweise vergleicht das System die positiven und die negativen Treibhausemissionen und benachrichtigt den Nutzer, wenn die positiven Emissionen die negativen Emissionen überschreiten. Vorzugsweise benachrichtigt das System den Nutzer, wenn die positiven Emissionen gleich den negativen Emissionen sind.

Zudem wird vorgeschlagen, dass der Produktemissionswert einem Wert entspricht, der von einem oder mehreren Treibhausgasemittenten erzeugt wurde. Ein Beispiel für einen Treibhausgasemittenten ist beispielsweise ein Fahrzeug, das das Produkt entlang einer Wegstrecke transportiert und entlang des Weges Treibhausgasemissionen erzeugt. Ein anderes Beispiel ist eine Verarbeitungsanlage, wie zum Beispiel ein Schredder für Schrott, der sich nicht bewegt, aber ein Produkt wie z.B. ein Schreddervormaterial über eine bestimmte Zeitdauer verarbeitet und dabei Treibhausgasemissionen erzeugt. Der Treibhausgasemittent ist also ein technisches Gerät oder System, das das körperliche Produkt real transportiert oder verarbeitet.

Zudem umfasst das Überwachungssystem eine Verarbeitungseinheit, die eingerichtet ist zum Empfangen, Speichern und Verändern der erfassten Produkte.

Es wird also eine Art zentrale Verarbeitungsstelle in Form der Verarbeitungseinheit vorgeschlagen, die die erfassten Produktdaten zunächst empfängt, diese speichert und auch verarbeitet. Ein Verarbeiten umfasst dabei ein Anpassen und Verändern der Daten. Die Verarbeitungseinheit kann auch als zentrale Verarbeitungseinheit aufgefasst werden.

Das Empfangen der Daten von der Eingabeschnittstelle erfolgt vorzugsweise mit einer Datenschnittstelle, die Teil der Verarbeitungseinheit ist. Es versteht sich, dass die Datenschnittstelle zu diesem Zweck mit der Eingabeschnittstelle datentechnisch verbunden ist. Als Datenschnittstelle kann beispielsweise eine Geräteschnittstelle, eine Programmierschnittstelle oder dergleichen vorgesehen sein.

Das Speichern der empfangenen Daten mit der Verarbeitungseinheit erfolgt vorzugsweise mit einem Datenspeicher, der Teil der Verarbeitungseinheit ist. Es versteht sich, dass der Datenspeicher zu diesem Zweck mit der Datenschnittstelle datentechnisch verbunden ist. Als Datenspeicher ist beispielsweise ein nicht flüchtiger Datenspeicher vorgesehen, wie ein Cloudspeicher, ein Datenspeicher auf einem Endgerät oder dergleichen. Der Datenspeicher kann aber auch außerhalb der Verarbeitungseinheit als externer Speicher ausgebildet sein.

Das Verarbeiten der Daten in der Verarbeitungseinheit erfolgt vorzugsweise mit einer Steuereinheit, die Teil der Verarbeitungseinheit ist. Es versteht sich, dass die Steuereinheit zu diesem Zweck mit den weiteren Komponenten der Verarbeitungseinheit datentechnisch verbunden ist, um auf diese zugreifen und/oder diese verändern zu können. Als Steuereinheit ist beispielsweise ein Prozessor vorgesehen, wie ein Mikroprozessor oder dergleichen.

Zudem umfasst das Überwachungssystem eine Berechnungseinheit zum Berechnen eines Emissionswertes eines Treibhausgasemittenten, wobei der berechnete Emissionswert einem realen Emissionswert entspricht, den ein körperlicher Treibhausgasemittent bei einem Transport oder einer Verarbeitung des körperlichen Produktes erzeugt.

Es wird also vorgeschlagen, dass mit einer Berechnungseinheit die emittierten Treibhausgasemissionen eines Treibhausgasemittenten bestimmt werden, die der Treibhausgasemittent während eines Transport- oder Verarbeitungsprozess des körperlichen Produktes erzeugt, das digital abgebildet ist. Die Berechnungseinheit kann ein Teil der Verarbeitungseinheit sein und vorzugsweise ist sie ein Teil der Verarbeitungseinheit.

Die Berechnungseinheit ist zudem dazu eingerichtet, den Emissionswert zu berechnen aus den erfassten Produktdaten eines ausgewählten erfassten Produktes und aus bereitgestellten Emittentendaten eines ausgewählten Treibhausgasemittenten, wobei die Emittentendaten einen körperlichen Treibhausgasemittenten digital abbilden.

Vorzugsweise ist die Berechnungseinheit ausgestaltet die positiven Treibhausemissionen als auch negative Treibhausemissionen zu berechnen. Die Ergebnisse können entweder miteinander verglichen werden oder zueinander addiert werden, wobei die negativen Treibhausemissionen ein negatives Vorzeichen bekommen.

Es wird also vorgeschlagen, dass in dem Überwachungssystem sowohl ein erfasstes Produkt ausgewählt wird als auch ein Treibhausgasemittent, der durch die Emittentendaten digital abgebildet ist, analog zu dem erfassten Produkt. Die Emittentendaten beschreiben also den körperlichen Treibhausgasemittenten, beispielsweise mit einem eindeutigen Namen, dessen Typ oder dessen Verbrauchsdaten oder dessen Energiequelle.

Die Auswahl des erfassten Produktes und des Treibhausgasemittenten kann dabei auf unterschiedliche Art und Weise erfolgen, beispielsweise durch eine manuelle, direkte oder indirekte Auswahl.

Vorzugsweise erfolgt ein manuelles Auswählen des erfassten Produktes und/oder des Treibhausgasemittenten über eine bzw. die Eingabeschnittstelle.

Vorzugsweise erfolgt ein direktes Auswählen des erfassten Produktes und/oder des Treibhausgasemittenten über eine bzw. die Eingabeschnittstelle, in dem ein Produkt aus einer Produktdatenbank oder ein Treibhausgasemittent aus einer Emittentendatenbank ausgewählt wird.

Vorzugsweise erfolgt ein indirektes Auswählen des erfassten Produktes und/oder des Treibhausgasemittenten über eine bzw. die Eingabeschnittstelle, indem ein hinterlegter und auswählbarer Berechnungsalgorithmus von der Berechnungseinheit ausgeführt wird, wobei in dem hinterlegten und auswählbaren Berechnungsalgorithmus ein Aufruf eines in einer Produktdatenbank erfassten Produktes festgelegt ist und/oder ein Aufruf eines in einer Emittentendatenbank erfassten Treibhausgasemittenten festgelegt ist, und/oder einer sonstigen Datenbank, wie eine Zusatzdatendatenbank.

Zudem ist die Verarbeitungseinheit dazu eingerichtet, den Produktemissionswert des ausgewählten Produktes mit dem berechneten Emissionswert zu aktualisieren, um einen individuellen und aktuellen Produktemissionswert für jedes erfasste Produkt bereitzustellen. Um die Aktualisierung durchzuführen, kann die Verarbeitungseinheit, wie zuvor beschrieben, auf den Datenspeicher zugreifen und die Produktdaten anpassen.

Es wird also ein Überwachungssystem bereitgestellt, mit dessen Hilfe der Ausstoß von Schadstoffen und Klimagasen für individuelle Produkte ermittelt wird.

Im Vergleich zu bekannten Systemen wird also eine produktbasierte Emissionsüberwachung vorgeschlagen, anstatt einer zeitbasierten Emissionsüberwachung über einen Zeitraum, wie z.B. bei üblichen CO₂-Rechnern. Durch die Zuordnung des individuellen Produktemissionswert zu einem Produkt, kann also quasi in Echtzeit festgestellt werden, wie viel Treibhausgasemissionen für das Produkt, so wie es gerade vorliegt, verbraucht ist. Es ist also jederzeit feststellbar, wie hoch die aktuell emittierten Treibhausgasemissionen des Produktes sind.

Die vorgeschlagene Erfindung geht somit über eine klassische und bekannte Einzelberechnung eines Emissionswertes über einen Berechnungszeitraum hinaus, indem ein veränderlicher Produktemissionswert fest einem Produkt für die Lebensdauer des Produktes und dauerhaft zugewiesen wird. So können individuell die emittierten Treibhausgasemissionen einzelner Produkte überwacht und nachverfolgt werden, nämlich über den gesamten Lebenszyklus des Produktes und entlang des Weges des Produktes. Vorzugsweise können auch die Treibhausemissionen mehrerer Produkte überwacht werden.

So wird ein Istzustand der emittierten Treibhausgas für jedes einzelne Produkt bereitgestellt. Aufbauend auf diesem Istzustand, kann entsprechend ein Treibhausgaseinsparpotential ermittelt werden oder es können Optimierungsmöglichkeiten der Emittenten vorgenommen werden. Die Ermittlung des Istzustandes ermöglicht somit, dass Treibhausgaseinsparpotential daran erkannt bzw. auf Basis des Istzustandes bestimmt werden kann.

Vorzugsweise sind die bereitgestellten Emittentendaten in einer Emittentendatenbank bereitgestellt. Die Emittentendatenbank umfasst also eine Vielzahl von individuellen Daten individueller Treibhausgasemittenten. Beispielsweise kann in der Emittentendatenbank ein körperlicher LKW digital abgebildet sein, mit einem Namen, einer Typangabe, und individuellen Verbrauchsdaten.

In einer besonders bevorzugten Ausführungsform sind in der Emittentendatenbank zeitbasierte Treibhausgasemittenten digital erfasst und abgebildet, die zeitbasiert Treibhausgasemissionen bei einer Verarbeitung des körperlichen Produktes erzeugen, insbesondere Verarbeitungsanlagen, wie z.B. Schrottpressen, Schredder oder Trennungsanlagen; und/oder sind in der Emittentendatenbank distanzbasierte Treibhausgasemittenten digital erfasst und abgebildet, die distanzbasiert Treibhausgasemissionen bei einem Transport des körperlichen Produktes erzeugen, insbesondere LKWs, Schiffe, Güterzüge; und/oder sind in der Emittentendatenbank festwertbasierte Treibhausgasemittenten digital erfasst und abgebildet sind, dem ein fester Emissionswert zugeordnet ist.

Es wird also vorgeschlagen in ortsfeste Treibhausgasemittenten zu unterscheiden, die zeitbasiert, also über eine Zeitdauer, Treibhausgasemissionen bei der Verarbeitung des Produktes erzeugen. Diese können auch als Verarbeitungsanlagen oder Verarbeitungsmittel aufgefasst werden, die das Produkt über eine Zeitdauer verarbeiten. Es wird auch vorgeschlagen in bewegliche Treibhausgasemittenten zu unterscheiden, die distanzbasiert, also über eine Wegstrecke, Treibhausgasemissionen beim Transport des Produktes erzeugen. Diese können auch als Transportmittel aufgefasst werden. Es wird auch vorgeschlagen in Treibhausgasemittenten mit einem festen Emissionswert zu unterscheiden. Dieser Emittent kann verwendet werden, wenn der Typ des Emittenten nicht bekannt ist oder er kann auch genutzt werden, um beispielsweise Produktlieferanten einen festen Wert emittierter Treibhausgasemissionen zuzuordnen.

Durch die vorgeschlagene Unterscheidung können u.a. gezielter die Emittenten überwacht und ausgewählt werden, was den Umgang mit dem Überwachungssystem vereinfacht.

Vorzugsweise ist die Verarbeitungseinheit dazu eingerichtet, die Produktdaten des ausgewählten Produktes nach der Berechnung des Emissionswertes zu aktualisieren, insbesondere eine Produktmenge des erfassten Produkts zu aktualisieren, und/oder ist die Verarbeitungseinheit dazu eingerichtet, ein Neuprodukt als erfasstes Produkt automatisiert den erfassten Produkten hinzuzufügen, wobei das Neuprodukt durch individuelle Produktdaten gekennzeichnet ist und diesem ein individueller Produktemissionswert zugeordnet ist, um ein verarbeitetes körperliches Produkt den erfassten Produkten hinzuzufügen, das in einem Verarbeitungsprozess mit dem Treibhausgasemittenten verarbeitet wurde.

Es wird also vorgeschlagen, dass die Verarbeitungseinheit die Produktdaten bearbeiten und verändern kann. Wird beispielsweise ein Produkt verbraucht, kann die Verarbeitungseinheit z.B. die Produktmenge, die als Produktdaten hinterlegt sind, anpassen oder das erfasste Produkt ganz löschen, wenn das Produkt verbraucht ist. Wird ein erfasstes Produkt beispielsweise in einem Verarbeitungsprozess verarbeitet, kann ein Neuprodukt entstehen.

Vorzugsweise wird vorgeschlagen, dass die Verarbeitungseinheit dazu eingerichtet ist, ein Neuprodukt als erfasstes Produkt automatisiert den erfassten Produkten hinzuzufügen. Die Verarbeitungseinheit ist beispielsweise mit einem Verarbeitungsalgorithmus dazu eingerichtet, ein Neuprodukt automatisch zu erstellen. Der Verarbeitungsalgorithmus kann auch als Arbeitsablauf aufgefasst werden. Die Daten für die Neuprodukte sind vorzugsweise in einer Neuproduktdatenbank oder Zusatzdatendatenbank hinterlegt oder direkt in dem Verarbeitungsalgorithmus hinterlegt. Vorzugsweise signalisiert die Verarbeitungseinheit dem Nutzer, vorzugsweise über eine Ausgabenschnittstelle, z.B. einen Bildschirm oder eine Netzwerkschnittstelle, dass ein Produkt automatische erstellt wurde. Somit wird dem Nutzer signalisiert, dass ein nutzerseitiges Eingreifen nicht mehr nötig ist.

Somit wird u.a. ein einfaches Überwachungssystem bereitgestellt, das leichter zu bedienen ist, da die Daten nicht nachträglich händisch anzupassen sind. Somit wird ebenfalls ein Überwachungssystem bereitgestellt, das dem Nutzer anzeigt, dass kein Nutzereingriff mehr nötig ist. Dadurch werden unnötige Nutzereingriffe verhindert und somit die Anzahl an Nutzereingriffen reduziert.

Vorzugsweise ist die Verarbeitungseinheit zur optischen Überwachung emittierter Treibhausgasemissionen mit einer optischen Anzeige ausgebildet, wobei die optische Anzeige dazu eingerichtet ist, den jeweils zugeordneten und aktualisierten Produktemissionswert mehrerer erfasster Produkte optisch anzuzeigen, vorzugsweise aller erfassten Produkte anzuzeigen.

Vorzugsweise zeigt die Verarbeitungseinheit, z.B. mit der optischen Anzeige, dem Nutzer die Summe der positiven Treibhausemissionen und die Summe der negativen Treibhausemissionen an. Vorzugsweise zeigt die Verarbeitungseinheit die Summe der positiven und negativen Treibhausemissionen an und signalisiert dem Nutzer, dass, wenn die Summe positiv ist, weitere CO₂ Ausgleichsmaßnahmen, z.B. in Form von Produkten mit negativen Treibhausemmissionen, z.B. das Pflanzen eines Baumes, eingeleitet werden müssen. Vorzugsweise vergleicht die Verarbeitungseinheit die Summe der erfassten Produkte mit negativen Treibhausemissionen mit der Summe aller erfassten Produkte mit positiven Treibhausemissionen. Vorzugsweise vergleicht die Verarbeitungseinheit die Summe aller erfassten Produkte mit negativen Treibhausemissionen mit der Summe aller erfassten Produkte mit positiven Treibhausemissionen. Führt der Vergleich zu dem Ergebnis, dass die Summe der positiven Treibhausemissionen die Summe der negativen Treibhausemissionen übersteigt, signalisiert sie dem Nutzer, dass weitere CO₂Ausgleichmaßnahmen eingeleitet werden müssen, um Klimaneutralität zu erreichen. Der Nutzer kann somit in Echtzeit Maßnahmen einleiten, um den Treibhausgasausstoß insgesamt neutral zu halten. Vorzugsweise müssen die Maßnahmen vom Nutzer außerhalb des Systems durchgeführt werden. So kann der Nutzer zum Beispiel einen Baum pflanzen lassen oder andere Ausgleichmaßnahmen ausführen. Vorzugsweise können die CO₂ Ausgleichmaßnahmen vom System erfasst werden. Beispielsweise kann der Nutzer die durchgeführten Maßnahmen angeben. Vorzugsweise sendet der Nutzer einen Beleg über die eingeleitete Maßnahme an das System oder gibt den Beleg über eine Eingabeschnittstelle ein. Vorzugsweise kann das System anhand des Belegt des zum Ausgleich verwendete Produkt automatisch erkennen. Alternativ kann das Produkt manuell vom Nutzer eingegeben werden.

Es wird also vorgeschlagen, die erfassten Produkte inklusive der aktualisierten Produktemissionswerte optisch anzuzeigen, beispielweise an einem Display eines Endgerätes. Durch die Darstellung mehrerer Produkte gleichzeitig, kann u.a. eine weitreichende Überwachung und Gruppenüberwachung von mehreren Produkten bereitgestellt werden.

So wird vorteilhafterweise eine optische Überwachung mehrerer Produktemissionswerte mehrerer erfasster Produkte bereitgestellt. Es kann damit eine produktübergreifende Überwachung erfolgen und auch die Produktemissionswerte ausgewählter Produkte verglichen werden. Es versteht sich, dass die Produkte zu diesem Zweck ausgewählt werden können, beispielsweise über eine Eingabeschnittstelle.

Vorzugsweise führt die Berechnungseinheit zum Berechnen des Emissionswertes einen hinterlegten und auswählbaren Transportalgorithmus und/oder Verarbeitungsalgorithmus aus, wobei die Algorithmen wenigstens abhängig sind von den erfassten Produktdaten des ausgewählten erfassten Produktes und den bereitgestellten Emittentendaten des auswählten Treibhausgasemittenten; und/oder weist die Berechnungseinheit eine Datenschnittstelle auf, um aktuelle Betriebsdaten eines Treibhausgasemittenten zu empfangen und/oder gespeicherte Betriebsdaten eines Treibhausgasemittenten aus einer bzw. der Emittentendatenbank zu empfangen. Der Verarbeitungsalgorithmus kann auch als Arbeitsablauf aufgefasst werden oder als Berechnungsalgorithmus aufgefasst werden.

Es wird also vorgeschlagen, in dem Überwachungssystem Berechnungsvorschriften zu hinterlegen, die die Berechnungseinheit ausführen kann. Die Berechnungsvorschriften können ausgewählt werden, beispielsweise über eine Eingabeschnittstelle. Der Transportalgorithmus ist somit eine Berechnungsvorschrift, die wenigstens die erfassten Produktdaten und die Emittentendaten enthält. Er kann auch als Berechnungsalgorithmus aufgefasst werden.

Vorzugsweise berücksichtigen die Algorithmen und/oder die Berechnungseinheit auch Zusatzdaten für einen Transport oder eine Verarbeitung, wie insbesondere ein Empfänger, eine Verarbeitungsmenge, oder eine Distanz zwischen dem Ablageort und dem Empfänger usw.

Vorzugsweise weist das Überwachungssystem zudem eine Generatoreinheit zum Erzeugen und/oder Ausgeben eines individuellen Emissionsnachweises für ein ausgewähltes und erfasstes Produkt auf, wobei der Emissionsnachweis wenigstens einen Teil der Produktdaten des ausgewählten und erfassten Produktes und/oder den aktuellen Produktemissionswert des ausgewählten und erfassten Produktes umfasst. Der Emissionsnachweises kann auch als Zertifikat aufgefasst werden, das beispielsweise elektronisch erstellt wird und ausdruckbar ist, beispielsweise als PDF.

Damit wird ein Überwachungssystem bereitgestellt, mit dessen Hilfe der Ausstoß von Schadstoffen und Klimagasen für individuelle Produkte ermittelt wird und ein Zertifikat als Beleg für das Produkt ausgegeben wird. Damit wird eine offline Überwachung bereitgestellt. Zudem kann das Zertifikat genutzt werden, um es an einer anderen Stelle wieder einzulesen. Nutzen beispielsweise zwei unterschiedliche Produktionsfirmen das vorgeschlagene Überwachungssystem getrennt voneinander, kann ein in der ersten Produktionsfirma erzeugtes Zertifikat manuell oder automatisiert bei der anderen Produktionsfirma eingelesen werden. So wird eine weitreichende Nachverfolgung bzw. Überwachung des Produktemissionswertes ermöglicht und auch ein einfaches Überwachungssystem bereitgestellt.

Vorzugsweise erlaubt diese Nachverfolgung somit die Überwachung der Emissionen eines Produktes, das in mehrere Produktionsfirmen unter verschiedenen Umständen genutzt wird. Vorzugsweise wird das Zertifikat, das in der ersten Produktionsfirma erstellt wurde, ungültig, wenn es im Überwachungssystem der zweiten Produktionsforma eingelesen wird. Das Überwachungssystem der zweiten Produktionsfirma übernimmt die Emissionswerte des ersten Zertifikats beim Erstellen des zweiten Zertifikats.

In einer besonders bevorzugten Ausführungsform weist der Emissionsnachweis einen dekodierbaren Code auf, insbesondere einen QR-Code oder einen Barcode, wobei vorzugsweise in dem Code wenigstens ein Teil der Produktdaten und der Produktemissionswert kodiert ist. Mit dem QR-Code wird eine besonders einfache Möglichkeit bereitgestellt, die Produkte mit der Eingabeschnittstelle zu erfassen, da die Teile der Produktdaten sowie der Produktemissionswert automatisiert aus dem QR-Code ausgelesen werden können.

Vorzugsweise ist die Eingabeschnittstelle als eine manuelle Eingabeschnittstelle ausgebildet, wobei eine manuelle Eingabeschnittstelle eine Eingabeschnittstelle ist, in der ein Benutzer manuell Daten erfasst, insbesondere die Produktdaten oder den Produktemissionswert, und/oder ist die Eingabeschnittstelle als eine automatisierte Eingabeschnittstelle ausgebildet, wobei eine automatisierte Eingabeschnittstelle eine Eingabeschnittstelle ist, in der ein Benutzer mit einem Produktscanner automatisiert Daten erfasst, insbesondere die Produktdaten oder den Produktemissionswert. Ein Beispiel für eine manuelle Eingabeschnittstelle ist eine Eingabemaske in einem Cloudsystem, in der eine Vielzahl von Eingabefeldern für die manuelle Eingabe von Produktdaten vorgesehen ist. Eine Verwendung einer automatisierten Eingabeschnittstelle zusammen mit einem Emissionsnachweis mit einem dekodierbaren Code ermöglicht ein Einlesen und schnelles Erfassen der Produktdaten.

Vorzugsweise umfasst das Überwachungssystem zudem ein Simulationsmodul zur Bestimmung eines minimierten Produktemissionswerts, wobei das Simulationsmodul dazu eingerichtet ist, den minimierten Produktemissionswert mit einem Optimierungsalgorithmus zu bestimmen, wobei der Optimierungsalgorithmus den minimierten Produktemissionswert in Abhängigkeit der Produktdaten und der Emittentendaten bestimmt. Das Simulationsmodul kann Teil der Berechnungseinheit sein oder die Berechnungseinheit selber sein, die eine Berechnungsvorschrift zur Bestimmung des minimierten Produktemissionswert ausführt. Beispielsweise kann die Simulationseinheit alle Produktemissionswerte vergleichen.

Zusätzlich oder alternativ ist das Simulationsmodul dazu eingerichtet ist, einen Vorschlag anzuzeigen mit welchem Treibhausgasemittent oder welchen Treibhausgasemittenten der bestimmte und minimierte Produktemissionswert erreicht wird, und/oder ist das Simulationsmodul dazu eingerichtet, einen Vorschlag anzuzeigen mit welchem Lieferant oder welchen Lieferanten der bestimmte und minimierte Produktemissionswert erreicht wird. Der Vorschlag kann beispielsweise in Form einer Liste angezeigt sein.

Vorzugsweise vergleicht das Simulationsmodul die Summe aller Produktemissionswerte mit einem Schwellwert. Der Schwellwert kann zum Beispiel CO₂ Ausgleichsmaßnahmen entsprechen. Die CO₂ Ausgleichsmaßnahmen können vom dem Nutzer des Systems durchgeführt werden. Zum Beispiel können Bäume gepflanzt werden. In Abhängigkeit des Simulationsergebnisses kann dem Nutzer signalisiert werden, ob die Summe aller Produktemissionswerte den Schwellwert, und somit vorzugsweise die CO₂ Ausgleichsmaßnahmen, übertrifft. Übertrifft der Vorschlag mit welchem Lieferant oder Lieferanten der bestimmte und minimierte Produktemissionswert den Schwellwert, signalisiert das Überwachungssystem dem Nutzer, dass weitere CO₂ Ausgleichsmaßnahmen eingeleitet werden müssen. Leitet der Nutzer weitere CO₂ Ausgleichsmaßnahmen ein, kann das System diese automatisch oder durch manuelle Eingabe des Nutzers erfassen, zum Beispiel kann der Nutzer über die Eingabeschnittstelle einen Beleg über die eingeleiteten Maßnahmen dem Überwachungssystem übermitteln. Unterschreitet die Summe aller Produktemissionswerte anschließend den Schwellwert, erstellt das System ein Zertifikat, dass die Produktemissionswerte umfasst und zertifiziert, dass Klimaneutralität erreicht wurde.

Es wird also vorgeschlagen, zum einen die niedrigsten Produktemissionswerte zu berechnen und anzuzeigen. Durch den Vorschlag können die Emittenten ausgewählt werden, die in Summe den geringsten Produktemissionswert auffassen.

Vorzugsweise weist das Überwachungssystem zudem eine Score-Berechnungseinheit auf, die zur Bestimmung eines Emittenten-Score für jeden Treibhausgasemittenten eingerichtet ist, wobei der Emittenten-Score zur Kennzeichnung der emittierten Treibhausgasemissionen der Treibhausgasemittenten eingerichtet ist, und insbesondere der Emittenten-Score mit einer mehrstufigen Skala ausgebildet ist, und insbesondere der Emittenten-Score individuell den einzelnen Treibhausgasemittenten zugeordnet ist. Der Emittenten-Score kann beispielsweise als eine Art Ampel dargestellt sein, mit einer farblichen Abstufung in Rot, Gelb und Grün, oder in Form eines Punktesystems umgesetzt sein, ähnlich wie bei einem bekannten Nutri Score oder bei einer Energieverbrauchskennzeichnung (A bis G; A+++ bis D).

Vorzugsweise umfassen die Produktdaten wenigstens eine Produktbezeichnung des erfassten Produkts, insbesondere eine eindeutige Typenbezeichnung, eine Produktmenge des erfassten Produkts, insbesondere eine Gewichtsangabe oder eine Stückzahlangabe, und eine Ortsangabe des erfassten Produkts, die einen Lagerort des Produktes anzeigt, und/oder zusätzlich Materialdaten.

Vorzugsweise umfassen die Emittentendaten wenigstens eine eindeutige und/oder eine generische Treibhausgasemittentenbezeichnung, Verbrauchsdaten des Treibhausgasemittenten, eine Ortsangabe des Treibhausgasemittenten, der einen Standort des Treibhausgasemittenten anzeigt, Routendaten, Kapazitätsdaten des Treibhausgasemittenten, die eine Auslastung oder Aufnahmekapazität des Treibhausgasemittents für das Produkt anzeigen, und/oder Lieferantendaten und insbesondere zeitbasierten Treibhausgasemittenten, distanzbasierten Treibhausgasemittenten und/oder lieferungsbasierten Treibhausgasemittenten.

Vorzugsweise ist jedes erfasste Produkt einem Cluster zuortbar, und eine Clusterberechnungseinheit ist dazu eingerichtet, einen Clusteremissionswert zu bestimmen, der einem Gesamtwert der individuellen Produktemissionswerten der dem Cluster zugeordneten erfassten Produkten entspricht. Ein Cluster kann auch als eine Zuordnung eines erfassten Produktes zu einer größeren Zuordnungseinheit aufgefasst werden. Es wird also vorgeschlagen, die individuellen Produkte zu Bündeln und den Bündelemissionswert zu bestimmen, der als Clusteremissionswert bezeichnet wird.

In einer besonders bevorzugten Ausführungsform ist eine Vergleichseinheit dazu eingerichtet, eine Vielzahl von Clusteremissionswerten unterschiedlicher Cluster zu vergleichen.

In einer weiteren besonders bevorzugten Ausführungsform ist die Vergleichseinheit dazu eingerichtet, ein Cluster mit dem niedrigsten Clusteremissionswert zu kennzeichnen und/oder mehrere Cluster entsprechend ihres Clusteremissionswertes zu sortieren oder kategorisieren.

Vorzugsweise ist das Überwachungssystem ein computergestütztes System, insbesondere ein Cloud Computing System, das auch als Serversystem aufgefasst werden kann oder eine mit einer Software eingerichtetes Endgerät, wie ein Computer, ein Smartphone oder ein Tablet.

Vorzugsweise ist die Eingabeschnittstelle zudem zum Erfassen des individuellen Produktemissionswert eingerichtet. So kann für jedes erfasste Produkt ein initialer Produktemissionswert hinterlegt werden und/oder der Produktemissionswert nachträglich angepasst werden, z. B. wenn dieser bei Produktdatenerfassung noch nicht bekannt war.

Vorzugsweise ist der Produktemissionswert ein Gesamtwert, der auch real verbrauchte Treibhausgasemissionen umfasst, die von einem oder mehreren Treibhausgasemittenten verbraucht wurden, wobei der Treibhausgasemittent in diesem Fall ein technisches Gerät ist, das dazu eingerichtet ist, Treibhausgasemissionen zu verbrauchen. Es wird also auch vorgeschlagen, dass negative Treibhausgasemittenten mit dem Überwachungssystem überwacht werden können.

Vorzugsweise ist die Berechnungseinheit zudem dazu eingerichtet, Zusatzdaten für einen Transport des Produktes und/oder für eine Verarbeitung des Produktes zur Bestimmung des Emissionswertes zu berücksichtigen, insbesondere
für einen Transport, einen Empfänger, eine Transportmengenangabe, ein Ladegewicht, ein Ankunftsdatum, einen Indikator der eine Leerfahrt anzeigt, eine Lieferbedingung, oder eine Distanz zwischen dem Produktstandort und einem Empfänger, wobei die Distanz vorzugsweise automatisch bestimmt wird, zu berücksichtigen, und insbesondere
für eine Verarbeitung, eine Verarbeitungsmengenangabe, einen Zeitpunkt der Verarbeitung, ein auswählbares Verarbeitungsergebnis, oder einen Verarbeitungswirkungsgrad zu berücksichtigen.

In einer weiteren erfindungsgemäßen Ausführungsform wird eine Generatoreinheit zum Erzeugen und/oder Ausgeben eines individuellen Emissionsnachweises für ein ausgewähltes und erfasstes Produkt vorgeschlagen. Die Generatoreinheit umfasst eine Eingabeschnittstelle zum Erfassen von Produktdaten eines körperlichen Produktes, um jedes körperliche Produkt individuell durch die Produktdaten als ein erfasstes Produkt digital abzubilden, wobei jedem erfassten Produkt ein individueller Produktemissionswert zugeordnet ist, und der Produktemissionswert veränderbar ausgebildet ist, und der Produktemissionswert ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet; eine Berechnungseinheit zum Berechnen eines Emissionswertes eines Treibhausgasemittenten, wobei der berechnete Emissionswert einem realen Emissionswert entspricht, den ein körperlicher Treibhausgasemittent bei einem Transport oder einer Verarbeitung des körperlichen Produktes erzeugt, wobei die Berechnungseinheit dazu eingerichtet ist, den Emissionswert zu berechnen aus erfassten Produktdaten eines ausgewählten erfassten Produktes und aus bereitgestellten Emittentendaten eines ausgewählten Treibhausgasemittenten, wobei die Emittentendaten einen körperlichen Treibhausgasemittenten digital abbilden, und eine Auswahleinheit die dazu eingerichtet ist, eine Vielzahl der erfassten Produkte anzuzeigen, wobei über eine bzw. die Eingabeschnittstelle ein Produkt aus der Vielzahl von erfassten Produkten auswählbar ist, und eine Generatoreinheit zum Erzeugen des Emissionsnachweises, wobei der Emissionsnachweis wenigstens einen Teil der Produktdaten des ausgewählten und erfassten Produktes und den aktuellen Produktemissionswert des ausgewählten und erfassten Produktes aufweist.

Das Generatormodul ist vorzugsweise ein Teil des Überwachungssystems nach einer der vorstehenden Ausführungsformen.

Vorzugsweise weist der Emissionsnachweis einen dekodierbaren Code auf, insbesondere einen QR-Code oder einen Barcode, und wobei vorzugsweise in dem Code wenigstens ein Teil der Produktdaten und der Produktemissionswert kodiert ist.

Hinsichtlich der Vorteile, Erläuterungen, Einzelheiten des weiteren erfindungsgemäßen Aspektes und dessen bevorzugten Ausführungsformen wird auf die entsprechenden oben beschriebenen Vorteile, Erläuterungen, Einzelheiten und bevorzugten Ausführungsformen verwiesen.

Zudem weist das zuvor beschriebene Überwachungssystem und/oder Generatormodul weitere bevorzugte Ausführungsformen auf, die nachfolgend beschrieben sind:
Die Registrierung zur Plattform, bzw. zu dem Überwachungssystem, erfolgt über eine Eingabemaske, in der der Nutzer sich mit seiner Firmenregistrierung, seinem individuellen Usernamen und Passwort einloggt.

In der Plattform sind dann zum einen voreingestellte Prozesse hinterlegt, zum anderen können firmenspezifische Prozesse hinterlegt werden. Beispiele sind:
- Fahrt von A nach B mit Leerfahrt von B nach A zurück.
- Fahrt von A nach C, dort abladen und einlagern in ein Lager.
- Leerfahrt von D nach C, dort vom Lager auslagern und aufladen und Fahrt nach B mit Leerfahrt zurück.
- Wie zuvor, jedoch ein/zwei/drei Bearbeitungsschritte im Lager.
- Fahrt mit Bahn von A nach B, dort umladen auf LKW und weiter nach C. Leerfahrt zurück.

In einer Datenbank, nämlich der Emittentendatenbank, sind für alle Standard-LKWs, Standard-Bagger, Umschlags- und Bearbeitungsmaschinen, wie z.B. Schrott-Scheren und Schredder, über die Diesel-/Strom-Verbräuche und die Angabe, ob Strom-Mix oder ÖkoStrom, die Verbrauchswerte pro Prozessschritt hinterlegt und ermittelbar.

Über den Verbrauch wird dann arithmetisch der individuelle Treibhausgasverbrauch je Prozessschritt und in Summe automatisch ermittelt.

Falls ein transportbasierter Emittent durch Geschwindigkeitsbegrenzer und/oder Fahrtraining der Fahrer einen niedrigeren Verbrauch hat, kann dieser firmenspezifisch hinterlegt werden. Das gleiche gilt für Verbräuche der Maschinen und Aggregate, also für zeitbasierte Treibhausgasemittenten.

Die Überprüfung der Daten, beispielweise der Emittentendaten, wird durch eine unabhängige Stelle vorgenommen und damit zertifiziert oder bestätigt. Somit kann ein Zertifikat erstellt werden, dass die realen Produktemissionen wiedergibt.

Pro Produktlieferung kann ein Nachweis über den CO₂-Verbrauch dieser Lieferung erstellt werden.

Genauso können Wochen-, Kunden-, Monats-, Sorten-spezifische Auswertungen automatisiert erstellt werden.

Vorzugsweise können auch negative Produktemissionen, z.B. durch CO₂ Ausgleichsmaßnahmen erfasst werden.

Es wird ein Multi-Tenency Cloud System vorgeschlagen, insbesondere für das sich Unternehmen registrieren und Konten für ihre Mitarbeiter anlegen können. Alle Mitarbeiter eines Unternehmens können so an demselben Datenbestand arbeiten, dessen Einsicht jedoch durch Rollen-basierten Zugriff eingeschränkt werden kann.

Grundsätzlich arbeiten alle Unternehmen für sich und mit ihren eigenen Beständen.

Systemseitig können Unternehmens-übergreifende Auswertungen vorgenommen werden vorzugsweise Durchschnittsberechnungen, Berechnungshilfen, Optimierungshilfen, Benchmarks, etc.

Es wird das folgende Rollensystem vorgeschlagen:

| | |
|---|---|
| Rollen-Name | Rollen-Beschreibung |
| Superadmin | Uneingeschränkter Zugriff auf alle nicht-verschlüsselten Daten, zur Auswertung und Administration. Plattformbetreibern vorbehalten. |
| Manager | Administrator auf Unternehmensseite. Nahezu uneingeschränkter Zugriff auf interne, also vom Unternehmen angelegte Daten. Ausgenommen sicherheitsrelevanter Daten, wie Passwörter der Benutzer. |
| Controller | Erweiterte Ansicht der Benutzeroberfläche für die allgemeine Administration und das Buchen von Transporten und Arbeiten. Sieht Historien, Details, Bestandsveränderungen, Auswertungen, Nachweise, etc. |
| Accountant | Eingeschränkte Ansicht der Benutzeroberfläche für das grundlegende Buchen von Transporten und Arbeiten. Sieht keine Historien oder Details im Allgemeinen. Die Oberfläche ist für die Mobile-Device Nutzung optimiert, um direkt von den Akteuren (Fahrer, Vorarbeiter, etc.) mittels Tablets genutzt werden zu können. Diese Rolle wird auch für die Buchung aus Fremdsystemen genutzt. |

Es wird folgender Datenbestand vorgeschlagen:
Grundsätzlich lebt das System von individuellen Benutzereingaben, die notwendig sind, um Abläufe im Betrieb möglichst realistisch abzubilden. Für die Berechnung von Emissionswerten sowie die vereinfachte Benutzung der Plattform für Ihre Anwender, sind jedoch einige Standardwerte hinterlegt.

Teil des Datenbestands sind dabei Energiequellen.

Für alle Energiequellen sind Emissionswerte hinterlegt, die als Berechnungsgrundlage herangezogen werden und mit der Berechnungseinheit berücksichtig werden können.

Hierbei wird unterschieden zwischen passiven, also durch die Produktion entstehenden Emissionen und aktiven, also die durch den Verbrauch entstehenden Emissionen. Die Liste ist erweiterbar. Alle Werte stammen aus vertrauenswürdigen Quellen, wie anerkannten Standards oder Statistiken des Umweltbundesamtes.

Als Energiequellen sind vorzugsweise vorgesehen:
Energiequelle |Einheit|CO₂-Emissionen Produktion | CO₂-Emissionen Verbrauch

| | | | |
|---|---|---|---|
| Diesel | L | 566 g/L | 2.629 g/L |
| Strommix | kWh | 401 g/kWh | 0 g/kWh |
| Ökostrom | kWh | 35 g/kWh | 0 g/kWh |

Es werden folgende Emittenten vorgeschlagen:
Hiermit sind alle Transport- oder Arbeitsmittel gemeint, die zum Einsatz kommen, bzw. dessen Einsätze verbucht werden können, also die zuvor beschriebenen Treibhausgasemittenten. Je nach Branche beschränken sich diese auf bestimmte Typen und können standardisiert hinterlegt werden.

Beispielsweise sind diverse Emittenten vom Typ LKW hinterlegt, die sich lediglich in ihrer Gewichtsklasse, sowie der Euro 1-6 Klassifizierung und damit im Verbrauch unterscheiden. Möchte ein Kunde seinen individuellen LKW benutzen, weil dieser bessere Verbrauchswerte als der beste Standard-LKW aufweist, kann dieser ebenfalls eingetragen werden. Der neue Emittent steht, nach Überprüfung der Angaben. Derselbe Zusammenhang zwischen Standard und Kundenangabe existiert bei Arbeitsmitteln, wie Radladern, Baggern, Schreddern, Pressen, Sortiermaschinen, etc.

Grundsätzlich wird bei Emittenten zwischen zeit- und distanzbasiert unterschieden, wie zuvor beschrieben.

Transportmittel wie LKW oder Bahn sind distanzbasiert und erwarten bei der Verbuchung die Eingabe der Distanz des Transports. Arbeitsmittel wie Schredder und Bagger sind zeitbasiert. Für die technische Umsetzbarkeit von Vergleichen, Verkettungen, etc., haben alle Emittenten zusätzlich die Angaben Energiequelle, Verbrauch pro Einheit der Energiequelle und Durchsatz in Tonnen pro Stunde oder pro Fahrt.

Beispielsweise könnte ein Bagger mit 102 kW 60 Tonnen pro Stunde und 8L Diesel pro Stunde und ein LKW mit 380 kW 26t pro Fahrt und 40L Diesel pro km angegeben werden, was die einheitliche Berechnung der Emissionswerte anhand des Gewichtes und damit die Verkettung ermöglicht.

Zudem werden folgende Produkte vorgeschlagen:
Standardprodukte, dessen Bewegungen insbesondere von Benutzern der Plattform verbucht werden können. Angefangen im Metall-Recycling umfassen diese beispielsweise Schreddervormaterial, Schredderschrott, Gussspäne, Stahlspäne, TZ-Pakete, etc.

Individuelle Produkte, die insbesondere von Administratoren angelegt werden, können lediglich unternehmensintern einsehbar sein.

Es können individuelle Produkte angelegt werden, die nur dem jeweiligen Unternehmen zur Verfügung stehen.

Es wird folgende Kontenstruktur vorgeschlagen:
Bei Konten wird unterschieden zwischen externen und internen Konten.

Anders ausgedrückt sind hiermit Standorte gemeint, zwischen oder auf denen Waren bewegt werden.

Externe Konten umfassen Lieferanten und Kunden, interne Konten umfassen temporäre Ablageplätze, sowie dauerhaftere Warenlager.

Für jedes Konto muss der Name des ansässigen Unternehmens bzw. Kaufmanns hinterlegt werden, die der Identifikation gilt und die genaue Adresse des Standortes.

Anhand dieser können mittels Geo-Algorithmen Distanzen zwischen Konten automatisiert ermittelt werden. Des Weiteren differenziert das System anhand der Konto-Typen die Warenflüsse: Extern => Intern bedeutet Wareneingang, Intern => Intern bedeutet interne Umschichtung oder Umbuchung und Intern => Extern bedeutet Warenausgang.

Diese Form der simplen Verkettung erlaubt zunächst die Abbildung der Produkte innerhalb eines einzelnen Betriebes oder mehrerer Betriebe. Damit einhergehend wird die rein interne Prozess- und Emissionsoptimierung, sowie die Branchenweite Strukturoptimierung bereitgestellt.

### Prozesse und Workflows

In dem vorgeschlagenen Überwachungssystem und/oder Generatormodul können Prozesse und Workflows angelegt werden, die zuvor als Transportalgorithmus und Verarbeitungsalgorithmus beschrieben sind.

Prozess meint hier die Zuweisung eines Emittenten zu einem Arbeitsschritt und Workflow meint die Verkettung beliebiger Prozesse. Beispielsweise kann bei einem Kunden der Workflow "Schreddern und Einlagern" die Prozesse "Befüllen (Bagger)", "Schreddern (Schredder)" und "Einlagern (Radlader)" verketten. Beim Anlegen solcher Prozesse muss die Energiequelle, der Durchsatz und der Verbrauch des jeweiligen Emittenten angegeben werden. Diese dienen später als Berechnungsgrundlage der Schadstoffemissionen.

Die Verkettung der einzelnen Prozesse zu Workflows erfolgt anhand von Schritten, die sequenziell abgearbeitet werden. Innerhalb eines Schrittes können beliebig viele Emittenten angegeben werden, die parallel arbeiten. Die Angabe parallel arbeitender Emittenten ist rechnerisch allerdings nur relevant, wenn es sich um verschiedene handelt.

Wenn im oberen Beispiel zwei Schredder mit 500 kW parallel betrieben werden, reicht es, wenn dieser einmalig angegeben wird, da die Menge an Emissionen dieselbe sein wird - unabhängig davon, ob ein Gerät zwei Stunden läuft, oder zwei Geräte jeweils eine Stunde. Einen Unterschied macht es jedoch, wenn ein Schredder mit 500 kW und einer mit 2200 kW parallel betrieben werden. Dann müssen für die präzise Berechnung der Emissionen beide Geräte im Prozess hinterlegt werden.

Eine weitere Besonderheit ist die Vermischung von Arbeiten, also zeitbasierten und Transporten, also distanzbasierten Emittenten innerhalb eines Workflows. Dies könnte der Fall sein, wenn zum Beispiel Waren an einem entfernten Gleis eingehen, vom Wagon auf LKW verladen, zu einem Hof transportiert und dort entladen und verräumt werden. Für diesen Fall benötigen distanzbasierte Emittenten ebenfalls die Angabe des Durchsatzes. Hier allerdings je Transport - unabhängig von Dauer oder Distanz - sodass automatisch berechnet werden kann, dass bei einer Menge von 50t, transportiert mit LKW Standard Euro 6 mit 26t Durchsatz, zwei Fahrten benötigt werden.

In dem Überwachungssystem können Wareneingänge und Warenausgänge verbucht werden und/oder Transporte erfasst werden.

### Frontend

Benutzer sehen eine Eingabemaske, die zum Großteil aus Auswahlfeldern der angegebenen Datenbasis besteht, sowie aus Variablen.

### Backend

Nach Auswahl der Felder "Von" und "Nach" wird eine Anfrage an den Geo-Service verschickt, der zunächst die GPS-Koordinaten der beiden hinterlegten Adressen mittels Geocoding ermittelt und zwischen diesen dann mittels Routing Maschine die Distanz berechnet. Hierzu werden Zwischendistanzen aus polygonalen Daten aggregiert.

Sämtliche Berechnungen werden serverseitig, also nach dem Versenden der Eingaben durch den Benutzer, getätigt, um Manipulation auszuschließen. Beginnend bei den hinterlegten Emissionswerten der ausgewählten Energiequelle ECO₂, dem hinterlegten Verbrauch des ausgewählten Transportmittels VT, sowie der zurückgelegten Distanz D, können die CO₂-Emissionen präzise kalkuliert werden: VT * D * ECO₂. Im Falle einer Leerfahrt wird das Ergebnis mit 1,8 multipliziert, also mit pauschal 20% weniger Verbrauch gerechnet.

Beispielsweise verbraucht ein 36L/100km LKW bei einer Distanz von 50km 18L Diesel und stößt dabei 18 * 2,629kg, also 47,32kg CO₂ aus. Während der Produktion des Diesels sind 18 * 0,566kg, also 10,19kg CO₂ ausgestoßen worden.

Des einen Warenausgang ist des anderen Wareneingang und es muss differenziert werden, auf wessen Konto die Emissions-Last gerechnet wird. Hierfür gibt es die Angabe Frei Haus/ Ab Station. Frei Haus bedeutet der Versender trägt die Last, Ab Station bedeutet, der Empfänger trägt die Last.

Serverseitig wird der Transport, sowie die eingegangene Ware gespeichert. Für letzteres werden die berechneten Emissionswerte hinterlegt und Benutzer sehen zukünftig die Eingegangene Ware mitsamt Emissionswerten auf Ihrem Dashboard.

Zudem können Warenverarbeitung und Arbeiten erfasst werden.

### Frontend

Benutzer sehen eine Eingabemaske, die zum Großteil aus Auswahlfeldern der angegebenen Datenbasis besteht, sowie Variablen.

### Backend

Die Berechnung der Emissionen eines einzelnen Emittenten des Workflows verläuft wie bei Transporten. Der wichtigste Unterschied ist die Mehrdimensionalität der Workflows durch die Verkettung der Emittenten und die Möglichkeit, einen Prozess mit mehreren Emittenten parallel durchzuführen. Dies ist praktikabel, da die Emittenten unterschiedliche Durchsätze haben. Im oberen Beispiel "Schreddern und Einlagern" könnte ein Bagger zwei Schredder befüllen, deren Ergebnis dann von zwei Radladern eingelagert wird. Im Optimalfall muss kein Prozess auf den vorigen warten.

Bezogen auf die Berechnung der Emissionen während der Durchführung des Workflows, ist dessen Gesamtdauer irrelevant. Ob zwei Radlader vier Stunden verladen oder einer acht Stunden, die Emissionswerte werden rechnerisch dieselben sein, solange der gleiche Bagger verwendet wird. Hier liegt die Grenze zwischen Realität und digitaler Abbildung. Es könnten unterschiedliche Emittenten je Prozess parallel verwendet werden und deren Anzahl kann noch während der Durchführung variieren.

Um die Eingaben möglichst simpel und damit den Aufwand möglichst gering zu halten, werden die Durchsatzwerte der Emittenten herangezogen. Ist ein Bagger beispielsweise mit einem Durchsatz von 50t pro Stunde hinterlegt, rechnet das System bei 100t mit einem Zeitaufwand von zwei Stunden und somit, bei einem Verbrauch von 10L pro Stunde mit 20L Diesel. Selbst wenn die Arbeit nach einer Stunde erledigt war, weil zwei Bagger eingesetzt wurden, wurden 2 x 10L also 20L Diesel verbraucht. Auch die Reihenfolge der Prozesse innerhalb eines Workflows ist aus rechnerischer Sicht hier irrelevant. Das System geht davon aus, dass ein Emittent, der auf einen anderen Emittenten warten muss, nicht läuft und damit auch keine Schadstoffe emittiert. Die Einbeziehung von Durchsätzen erlaubt also die dynamische Skalierung der Workflows, ohne dass für dessen Buchung viele Detailangaben zu tätigen sind.

Serverseitig wird die Durchführung eines Workflows, sowie dessen Ergebnisware gespeichert. Für letzteres werden die berechneten Emissionswerte auf die bisherigen addiert und das Ergebnis als neue Emissionswerte hinterlegt. Benutzer sehen zukünftig die Ware mitsamt Emissionswerten auf Ihrem Dashboard.

### Nachweise

### Frontend

Benutzer sehen auf ihrem Dashboard bzw. auf einem Display, alle Waren, welche somit auch die CO₂-Last durch Transport und Verarbeitung tragen. Für jedes Haufwerk bzw. jedes erfasste Produkt, das als Haufwerk aufgefasst werden kann, kann ein Nachweis über dessen CO₂-Last per Klick angefordert werden. Daraufhin erhält der Benutzer z.B. ein PDF-Dokument mit rudimentären Informationen zu seinem Unternehmen, dem Haufwerk, also Material und Menge, sowie folgenden Emissionsangaben: CO₂ in kg (passiv), was dem Gewicht des CO₂ entspricht, welches durch die Produktion der bei Transport oder Verarbeitung verwendeten Energiequellen, ausgestoßen wurde. CO₂ in kg (aktiv), was dem Gewicht des CO₂ entspricht, welches durch den Einsatz der Energiequelle bei Transport und Verarbeitung ausgestoßen wurde. Sowie die Werte CO₂/t (passiv) und CO₂/t (aktiv), welche die zuvor angegebenen Werte in Relation zum Gesamtgewicht der Ware setzt. Und final den Gesamt-Angaben CO₂ in kg und CO₂ in kg/t, welche die oben genannten Werte zusätzlich aufaddieren und ausweisen.

### Backend

Bei der Nachweis-Funktion wird eine benutzergerechte Darstellung in einem praktischen Format bereitgestellt. Der Standardfall ist hierfür die Erzeugung eines PDF-Dokumentes.

Zusätzlich oder alternativ sind die hinterlegten Werte mittels REST API abrufbar und damit auch externen Systemen in Echtzeit zugänglich.

### Auswertbarkeit

Sämtliche Daten werden in Echtzeit strukturiert erfasst und sind damit zu jeder Zeit auswertbar. Hierbei kann man zwischen unternehmensinternen, sowie unternehmensübergreifenden Auswertungen unterscheiden. Erstere umfassen beispielsweise die Entwicklung von Emissionswerten über verschiedene Haufwerke, Lagerbestände oder Workflows hinweg und beschränken sich rein auf die unternehmenseigenen Daten. Letzteres dagegen erlaubt die anonymisierte Auswertung von Gütern, Regionen, Branchen, etc. und Unternehmen sind in der Lage, ihre eigenen Bemühungen um CO₂-Ersparnis einzuordnen und sich entsprechend zu positionieren. Dies kann durch die die Zuweisung der Produkte zu Clustern erfolgen.

Weiterhin können Veränderungen über einen beliebigen Zeitraum hinweg dargestellt werden, wodurch beispielsweise die Auswirkung von Optimierungen an Transportmitteln analysiert werden kann. Das System lernt also, welche Einflüsse einzelne Emittenten auf das Gesamtergebnis haben und kann Empfehlungen über Optimierungspotenziale geben.

### Ausgleichsmaßnahmen

Das Erreichen von CO₂-Neutralität ist für viele Unternehmen ein Zukunftsziel, umfasst jedoch nicht ausschließlich die reine Optimierung der eigenen Abläufe. Stattdessen können Ausgleichsmaßnahmen bezogen werden, die im Gesamtergebnis für Neutralität sorgen.

Ein Auswertungsziel dieses Ökosystems ist die Erstellung einer CO₂-Bilanz, basierend auf fundamentierten Daten. Hierfür werden die CO₂-Emissionen durch Transport und Verarbeitung im Betrieb erfasst und ergeben so ein Gesamtergebnis, das über verschiedene Haufwerke und Zeiträume hinweg dargestellt werden kann. Als Gegenstück dazu sollen des Weiteren Ausgleichsmaßnahmen gebucht werden können. Genau wie Emittenten anhand ihrer Emissionswerte bewertet werden, kann beispielsweise das Pflanzen von Bäumen als Ausgleich dazu bewertet und entsprechend verbucht werden.

### Schadstoffbilanz

Das Endergebnis ist eine Bilanz, die auf der einen Seite die Emissionen aufschlüsselt und auf der anderen Seite die getätigten Ausgleichsmaßnahmen. Ausschließlich auf diese Art kann mathematisch fundierte CO₂-Neutralität erreicht werden.

Vorzugsweise signalisiert das System dem Nutzer weiteren Ausgleichsmaßnahmen einzuleiten, wenn die Emissionen die Ausgleichsmaßnahmen überschreiten. Somit eine ausgeglichene Schadstoffbilanz sichergestellt werden. Insbesondere dadurch, dass der Nutzer reale Ausgleichsmaßnahmen einleitet. Zum Beispiel kann beim Pflanzen eines Baumes berücksichtig werden, dass der Baum erst gepflanzt werden muss und auch wächst, so dass er seine volle Wirkung erst zu einem späteren Zeitpunkt erreicht.

Das System und das Modul weisen zudem Standard-Schnittstellen zur Anbindung an andere Systeme auf.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch einen Aufbau eines Systems zur Überwachung emittierter Treibhausgasemissionen in einer Ausführungsform;
- Fig. 2: zeigt schematisch einen Aufbau eines Systems zur Überwachung emittierter Treibhausgasemissionen in einer weiteren Ausführungsform;
- Fig. 3: zeigt schematisch einen Aufbau eines Generatormoduls zum Erzeugen und/oder Ausgeben eines individuellen Emissionsnachweises in einer Ausführungsform;
- Figs. 4A-E: zeigen schematisch eine Ausführungsform des Systems zur Überwachung emittierter Treibhausgasemissionen, nämlich als ein Cloud Computing System, wobei ein Verarbeitungsalgorithmus ausgeführt wird;
- Figs. 5A-F: zeigen schematisch eine Ausführungsform des Systems zur Überwachung emittierter Treibhausgasemissionen, nämlich als ein Cloud Computing System, wobei ein Verarbeitungsalgorithmus ausgeführt wird;
- Figs. 6A-C: zeigen drei verwendete Datenbanken in einer Ausführungsform;
- Fig. 7: zeigt einen individuellen Emissionsnachweis in einer Ausführungsform; und
- Fig. 8: zeigt eine Eingabeschnittstelle in einer Ausführungsform.

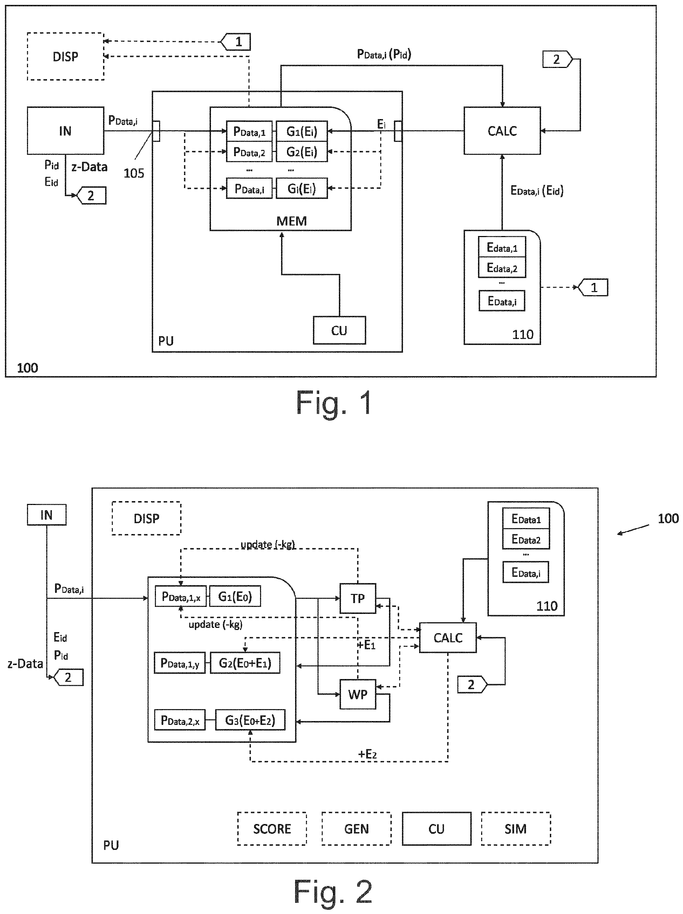

Die Figur 1 zeigt ein System zur Überwachung 100 emittierter Treibhausgasemissionen.

Das Überwachungssystem 100 weist Eingabeschnittstelle IN zum Erfassen von Produktdaten P_{Data,i} eines körperlichen Produktes auf, um jedes körperliche Produkt individuell durch die Produktdaten als ein erfasstes Produkt digital abzubilden, wobei jedem erfassten Produkt ein individueller Produktemissionswert G₁, G₂, Gᵢ zugeordnet ist. Die feste Zuordnung der Verbindung zwischen den erfassten Daten P_{Data,i} und dem individuellen Produktemissionswert Gᵢ ist durch eine kleine Verbindungslinie zwischen den Blöcken P_{Data,i} und Gᵢ angedeutet. Der Buchstabe i veranschaulicht einen Index.

Die erfassten Produktdaten P_{Data,i} sowie die zugeordneten Produktionsemissionswerte Gᵢ sind in einer Datenspeicher MEM gespeichert. Auf den Datenspeicher MEM kann eine Steuereinheit CU zugreifen, um die Daten im Datenspeicher zu verändern oder anzupassen. Sowohl der Datenspeicher MEM wie auch die Steuereinheit CU sind als Bestandteil der Verarbeitungseinheit PU dargestellt.

Der Produktemissionswert Gᵢ ist veränderbar ausgebildet, und der Produktemissionswert Gᵢ ist ein Gesamtwert, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet.

Vorzugsweise können Produktemissionswerte auch negativ sein, sodass in diesem Fall, Treibhausgase reduziert werden, zum Beispiel absorbiert. Die Emittenten sind dann Absorbierer.

Zudem weist das Überwachungssystem 100 eine Verarbeitungseinheit PU auf, die eingerichtet zum Empfangen, Speichern und Verändern der erfassten Produkte. Das Empfangen der Daten von der Eingabeschnittstelle IN erfolgt mit einer Datenschnittstelle 105 und ist mit einem Pfeil veranschaulicht. Das Speichern der empfangenen Daten mit der Verarbeitungseinheit 100 erfolgt mit dem Datenspeicher MEM. Das Verarbeiten der Daten in der Verarbeitungseinheit PU erfolgt mit der Steuereinheit CU. Die Steuereinheit CU ist Teil der PU und kann auf den MEM zugreifen und diesen anpassen und verändern, also auch die Einträge in dem MEM anpassen.

Zudem weist das Überwachungssystem 100 eine Berechnungseinheit CALC zum Berechnen eines Emissionswertes Eᵢ eines Treibhausgasemittenten auf, wobei der berechnete Emissionswert Eᵢ einem realen Emissionswert entspricht, den ein körperlicher Treibhausgasemittent bei einem Transport oder einer Verarbeitung des körperlichen Produktes erzeugt.

Die Berechnungseinheit CALC ist dazu eingerichtet, den Emissionswert Eᵢ zu berechnen aus erfassten Produktdaten eines ausgewählten erfassten Produktes P_{Data,i}(P_{id}) und aus bereitgestellten Emittentendaten eines ausgewählten Treibhausgasemittenten E_{Data,i}(E_{id}), wobei die Emittentendaten einen körperlichen Treibhausgasemittenten digital abbilden. Wie in der Figur 1 dargestellt ist, ist die Berechnungseinheit CALC mit dem Datenspeicher MEM und der Emittentendatenbank 110 datentechnisch verbunden und dazu eingerichtet, die Daten aus den beiden Speichern MEM und 110 zu empfangen.

Wie in der Figur 1 zu erkennen ist, wird über die Eingabeschnittstelle IN ein Auswahlbefehl P_{id} und E_{id} zum Auswählen der erfassten Produkte sowie zum Auswählen der erfassten Emittentendaten E_{Data,i} eingegeben Die Auswahl des erfassten Produktes und des Treibhausgasemittenten kann dabei auf unterschiedliche Art und Weise erfolgen, beispielsweise durch eine manuelle, direkte oder indirekte Auswahl. Die Auswahlbefehle P_{id} und ein E_{id} können beispielsweise Indizes sein, die die Daten in dem Datenspeicher MEM und in der Emittentendatenbank 110 indizieren.

Die Eingabeschnittstelle IN ist als eine manuelle Eingabeschnittstelle ausgebildet, wobei eine manuelle Eingabeschnittstelle eine Eingabeschnittstelle ist, in der ein Benutzer manuell Daten erfasst, wie die Produktdaten oder einen Initialwert des Produktemissionswertes Gᵢ.

Die Verarbeitungseinheit PU ist zudem dazu eingerichtet, den Produktemissionswert Gᵢ des ausgewählten Produktes mit dem berechneten Emissionswert Eᵢ zu aktualisieren, um einen individuellen und aktuellen Produktemissionswert Gᵢ(Eᵢ) für jedes erfasste Produkt bereitzustellen. Dies ist auch in der Figur 2 dargestellt, die eine weitere Ausführungsform der Figur 1 mit weiteren Details ist.

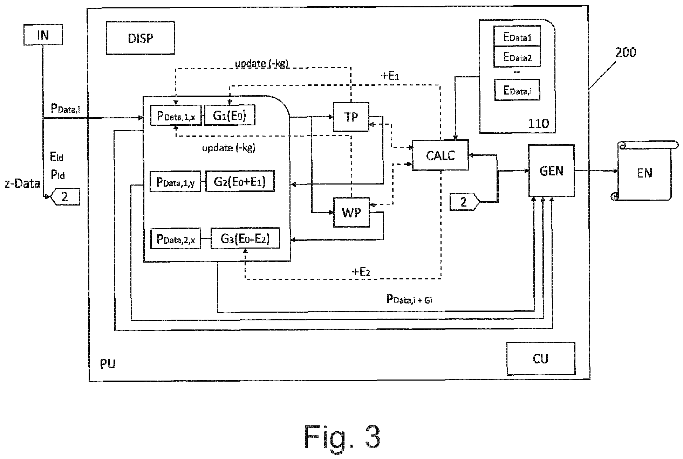

Der aktuelle Produktemissionswert Gᵢ(Eᵢ) kann beispielsweise mit einer Generatoreinheit GEN zusammen mit Teilen der erfassten Produktdaten P_{Data,i} als ein Emissionsnachweis EN ausgegeben werden, wie in der Figur 3 gezeigt. Zudem kann auf Basis des individuellen und aktuellen Produktemissionswertes Gᵢ(Eᵢ) ein Simulationsmodul SIM einen minimierten Produktemissionswert bestimmen.

Die bereitgestellten Emittentendaten E_{Data,i} sind in einer Emittentendatenbank 110 bereitgestellt und werden von der Berechnungseinheit CALC für die Berechnung des Emissionswertes Eᵢ berücksichtigt. Die Emittentendaten E_{Data,i} können kategorisiert sein und zeitbasierte, distanzbasierte und/oder festwertbasierte Treibhausgasemittenten digital abbilden, wie z.B. Schrottpressen, Schredder oder Trennungsanlagen, LKWs, Schiffe, Güterzüge oder dergleichen.Im Grunde kann die Emittentendatenbank also jede beliebige Verarbeitungsanlage oder jedes Transportmittel umfassen, die bzw. das Treibhausgasemissionen erzeugt.

Die Emittentendatenbank kann vorzugsweise auch die Absorbierer, d.h. Emittenten mit negativem Produktemissionswert, bereitstellen, z.B, Bäume.

Die Verarbeitungseinheit PU ist mit der Steuereinheit CU dazu eingerichtet, die Produktdaten P_{Data,i} des ausgewählten Produktes nach der Berechnung des Emissionswertes Eᵢ zu aktualisieren, was durch den Pfeil ausgehend von dem Block CU zu dem Block MEM veranschaulicht ist, und wie beispielsweise auch in der Figur 2 dargestellt ist.

Die Verarbeitungseinheit PU kann zur optischen Überwachung emittierter Treibhausgasemissionen mit einer optischen Anzeige DISP ausgebildet sein, wobei die optische Anzeige dazu eingerichtet ist, den jeweils zugeordneten und aktualisierten Produktemissionswert aller erfassten Produkte anzuzeigen, um eine optische Überwachung mehrerer Produktemissionswerte bereitzustellen. Dies ist mit einem Verbindungspfeil von MEM zu DISP in der Figur 1 veranschaulicht.

Die Berechnungseinheit CALC und die Emittentendatenbank 110 sind in der Figur 1 zwar neben der PU dargestellt, sie können jeweils aber Teil der PU sein, genauso wie die Eingabeschnittstelle IN.

Die Produktdaten P_{Data,i} umfassen wenigstens eine Produktbezeichnung des erfassten Produkts, z.B. eine eindeutige Typenbezeichnung, eine Produktmenge des erfassten Produkts, wie eine Gewichtsangabe (kg) oder eine Stückzahlangabe, eine Ortsangabe (x, y) des erfassten Produkts, die einen Lagerort des Produktes anzeigt, und/oder Materialdaten.

Die Emittentendaten Gᵢ umfassen wenigstens eine eindeutige und/oder eine generische Treibhausgasemittentenbezeichnung, Verbrauchsdaten des Treibhausgasemittenten, eine Ortsangabe des Treibhausgasemittenten, der einen Standort des Treibhausgasemittenten anzeigt, Routendaten, Kapazitätsdaten des Treibhausgasemittenten, die eine Auslastung oder Aufnahmekapazität des Treibhausgasemittents für das Produkt anzeigen, und/oder Lieferantendaten.

Zudem ist in der Figur 1 dargestellt, dass in der Berechnungseinheit CALC auch Zusatzdaten z-Data berücksichtigt werden, nämlich z.B. für einen Transport des Produktes die Zusatzdaten Empfänger, Transportmengenangabe, Ankunftsdatum, ein Indikator der eine Leerfahrt anzeigt, und/oder eine Lieferbedingung, und für eine Verarbeitung des Produktes mit einer Verarbeitungsanlage eine Verarbeitungsmengenangabe, ein Zeitpunkt der Verarbeitung, ein auswählbares Verarbeitungsergebnis, und/oder ein Verarbeitungswirkungsgrad.

Figur 2 zeigt ein Überwachungssystem 100, wie beispielsweise in der Figur 1 gezeigt, wobei die Verarbeitungseinheit PU dazu eingerichtet ist, die Produktdaten des ausgewählten Produktes nach der Berechnung des Emissionswertes Eᵢ, z.B. E₁, E₂, zu aktualisieren, was für das Produkt PData,1,x beispielhaft mit dem Pfeil "update(-kg)" veranschaulicht ist. Die Figur 2 zeigt also, dass eine Produktmenge des erfassten Produkts P_{Data,1,x} aktualisiert wird.

Die Verarbeitungseinheit PU ist zudem dazu eingerichtet, ein Neuprodukt P_{Data,2,x} als erfasstes Produkt automatisiert den erfassten Produkten hinzuzufügen, wobei das Neuprodukt durch individuelle Produktdaten P_{Data,2,x} gekennzeichnet ist und denen ein individueller Produktemissionswert G₃ zugeordnet ist, um z.B. ein verarbeitetes körperliches Produkt den erfassten Produkten hinzuzufügen, das in einem Verarbeitungsprozess mit dem Treibhausgasemittenten verarbeitet wurde.

Zudem zeigt die Figur 2, dass die Berechnungseinheit CALC zum Berechnen des Emissionswertes Eᵢ, bzw. E₁, E₂ einen hinterlegten und auswählbaren Transportalgorithmus TP und Verarbeitungsalgorithmus WP ausführt, wobei die Algorithmen TP und WP wenigstens abhängig sind von den erfassten Produktdaten P_{Data,i} eines ausgewählten erfassten Produktes und den bereitgestellten Emittentendaten E_{Data,i} eines ausgewählten Treibhausgasemittenten.

Die Berechnungseinheit CALC weist zudem eine nicht dargestellte Datenschnittstelle auf, um aktuelle Betriebsdaten eines Treibhausgasemittenten zu empfangen, um so aktuelle Betriebsparameter eines Treibhausgasemittenten zu berücksichtigen.

Zudem kann die Berechnungseinheit CALC gespeicherte Betriebsdaten eines Treibhausgasemittenten aus einer bzw. der Emittentendatenbank empfangen, was nicht in den Figuren dargestellt ist, um gespeicherte aktuelle Betriebsparameter eines Treibhausgasemittenten zu berücksichtigen.

Im Vergleich zu der Figur 1 ist in der Figur 2 zudem ein Simulationsmodul SIM zur Bestimmung eines minimierten Produktemissionswerts dargestellt. Das Simulationsmodul SIM ist dazu eingerichtet ist, einen minimierten Produktemissionswert mit einem Optimierungsalgorithmus zu bestimmen, wobei der Optimierungsalgorithmus den minimierten Produktemissionswert in Abhängigkeit der Produktdaten und der Emittentendaten bestimmt, und/oder dazu eingerichtet ist, einen Vorschlag anzuzeigen mit welchem Treibhausgasemittent oder welchen Treibhausgasemittenten der bestimmte und minimierte Produktemissionswert erreicht wird, und/oder dazu eingerichtet ist, einen Vorschlag anzuzeigen mit welchem Lieferant oder welchen Lieferanten der bestimmte und minimierte Produktemissionswert erreicht wird. Dies ist in der Figur 2 nicht dargestellt.

Das Überwachungssystem 100 der Figur 2 veranschaulicht zudem eine Score-Berechnungseinheit SCORE, die zur Bestimmung eines Emittenten-Score für jeden Treibhausgasemittenten eingerichtet ist, wobei der Emittenten-Score zur Kennzeichnung der emittierten Treibhausgasemissionen der Treibhausgasemittenten eingerichtet ist, und der Emittenten-Score mit einer mehrstufigen Skala ausgebildet ist, und der Emittenten-Score individuell den einzelnen Treibhausgasemittenten zugeordnet ist.

Die Figur 2 zeigt weiter, dass über die Eingabeschnittstelle IN die Produktdaten P_{Data,i} und eine Produktauswahl P_{id} und eine Emittentenauswahl E_{id} sowie Zusatzdaten z-Data empfangen werden. Die Produktauswahl kann auch als Auswahlbefehle bezeichnet werden.

Die Produktdaten P_{Data,i} werden in einem konkreten Beispiel als P_{Data,1,x} erfasst. P_{Data,1,x} ist ein erstes erfasstes Produkt, dass durch die Produktdaten P_{Data,1} gekennzeichnet ist, wobei das erfasste Produkt einem Ort x zugewiesen ist. Zudem ist diesem ersten erfassten Produkt ein Produktemissionswert G₁(E₀) zugeordnet.

Wird nun z. B. eine Teilmenge des ersten Produktes real von dem Ort x zu einem Ort y transportiert, ist die Berechnungseinheit CALC mit dem Transportalgorithmus TP dazu eingerichtet, einen Emissionswert E₁ auf Basis von den empfangenen Daten P_{Data,i}(P_{id}), E_{Data,i} (Eid) sowie z-Data zu berechnen, also z.B. auf Basis von P_{Data,1}(P_{id1}), E_{Data,1}(E_{id1}), wenn das erste Produkt ausgewählt wird. Die Datenverbindung zwischen MEM und der Berechnungseinheit CALC, die in der Figur 1 dargestellt ist, ist in der Figur 2 zur besseren Übersicht nicht dargestellt.

P_{id} und E_{id} entsprechen also einer Produktauswahl bzw. Auswahlbefehlen zur Auswahl eines erfassten Produktes oder eines erfassten Treibhausgasemittenten. Diese können auch als Indizes aufgefasst werden, mit dem die Daten in den Datenspeichern MEM und 110 referenziert werden. Es können auch noch weitere Indizes vorgesehen sein, um andere Datenbanken zu referenzieren, wie ein Index Zᵢ zum Indizieren einer Zusatzdatendatenbank.

In der Figur 2 ist zudem dargestellt, wie ein Neuprodukt erstellt wird. Das Überwachungssystem 100 erstellt ein erstes Neuprodukt P_{Data,1,y} das dem Produkt P_{Data,1,x} entspricht, aber an einem anderen Lagerort y abgelegt wurde. Für diesen Fall aktualisiert die Berechnungseinheit CALC die Daten des ersten Produktes P_{Data,1,x} indem sie beispielsweise eine Mengenangabe des Produktes P_{Data,1,x} reduziert (Pfeil mit update(-kg)). Dem ersten Neuprodukt P_{Data,1,y} wird dann ein neuer Produktemissionswert G₂ zugwiesen, der der Summe aus E₀+E₁ entspricht. Das System addiert also die Treibhausgasemissionen die beim Transport des ersten erfassten Produktes P_{Data,1,x} entstanden sind und passt die Daten das ersten Produktes automatisch an.

Zudem veranschaulicht die Figur 2, dass die Berechnungseinheit CALC mit dem Verarbeitungsalgorithmus WP dazu eingerichtet ist, einen Emissionswert E₂ auf Basis von den empfangenen Daten P_{Data,i}(P_{id}), E_{Data,i} (Eid) sowie z-Data zu berechnen. Die Vorgehensweise ist analog zum Transportalgorithmus. Das Überwachungssystem erstellt ein weiteres Neuprodukt P_{Data,2x}, das dem verarbeiteten Produkt P_{Data,1,x} entspricht und an demselben Lagerort x abgelegt ist. Die Berechnungseinheit CALC aktualisiert die Daten des ersten Produktes P_{Data,1,x}, indem es beispielsweise eine Mengenangabe reduziert (Pfeil mit update(-kg)). Dem Neuprodukt P_{Data,2,x} wird dann ein neuer Produktemissionswert G₃ zugewiesen, der der Summe aus E₀+E₂ entspricht. Das System addiert also die Treibhausgasemissionen, die bei der Verarbeitung des ersten erfassten Produktes P_{Data,1,x} entstanden sind und passt die Daten das ersten Produktes automatisch an.

Vorzugsweise kann die Verarbeitungseinheit die Summe aller Produktemissionen berechnen und mit einem Schwellwert, der vorzugsweise CO₂-Ausgleichmaßnahmen entspricht, die zum Beispiel in der Emittentendatenbank als Emittenten mit negativer Produktemission erfasst sind, vergleichen. Übertrifft die Summe aller Produktemissionen den Schwellwert wird dem Nutzer signalisiert, weitere Ausgleichsmaßnahmen einzuleiten. Vorzugsweisen können auch einzelne Produktemissionswerte mit Schwellwerten, die Ausgleichsmaßnahmen für diese Produkte entsprechen, verglichen werden, das System signalisiert dem Nutzer weitere Ausgleichsmaßnahmen für diese Produkte einzuleiten, falls die Schwelle überschritten wird. Somit kann durch das Umsetzen der Meldungen des Systems an den Nutzer ein CO₂ Ausgleich für einzelne oder alle Produkte erreicht werden.

Die Figur 2 zeigt zudem, dass die Verarbeitungseinheit PU eine Generatoreinheit GEN aufweist. Das Überwachungssystem 100 umfasst also auch eine Generatoreinheit GEN zum Erzeugen und/oder Ausgeben eines individuellen Emissionsnachweises EN für ein ausgewähltes und erfasstes Produkt, wobei der Emissionsnachweis EN wenigstens einen Teil der Produktdaten P_{Data,i} des ausgewählten und erfassten Produktes und/oder den aktuellen Produktemissionswert Gᵢ des ausgewählten und erfassten Produktes umfasst. Die Auswahl, welcher Emissionsnachweis erzeugt bzw. bereitgestellt werden soll, kann ebenfalls über die Eingabeschnittstelle IN erfolgen.

Die Figur 3 zeigt schematisch einen Aufbau eines Generatormodul 200 zum Erzeugen und/oder Ausgeben eines individuellen Emissionsnachweises EN in einer Ausführungsform.

Das Generatormodul 200 ist zum Erzeugen und/oder Ausgeben eines individuellen Emissionsnachweises EN für ein ausgewähltes und erfasstes Produkt P_{Data,i}(P_{id}) zur Überwachung emittierter Treibhausgasemissionen ausgebildet.

Das Generatormodul 200 umfasst eine Eingabeschnittstelle IN zum Erfassen von Produktdaten eines körperlichen Produktes, um jedes körperliche Produkt individuell durch die Produktdaten als ein erfasstes Produkt digital abzubilden, wobei jedem erfassten Produkt P_{Data,i} ein individueller Produktemissionswert Gᵢ zugeordnet ist, und der Produktemissionswert veränderbar Gᵢ ausgebildet ist, und der Produktemissionswert Gᵢ ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet.

Das Generatormodul 200 umfasst zudem eine Berechnungseinheit CALC zum Berechnen eines Emissionswertes Eᵢ eines Treibhausgasemittenten, wobei der berechnete Emissionswert einem realen Emissionswert entspricht, den ein körperlicher Treibhausgasemittent bei einem Transport oder einer Verarbeitung des körperlichen Produktes erzeugt.

Die Berechnungseinheit ist dazu eingerichtet, den Emissionswert zu berechnen aus erfassten Produktdaten eines ausgewählten erfassten Produktes P_{Data,i}(P_{id}) und aus bereitgestellten Emittentendaten eines ausgewählten Treibhausgasemittenten E_{Data,i}(E_{id}), wobei die Emittentendaten einen körperlichen Treibhausgasemittenten digital abbilden. Eine Datenverbindung zwischen der Berechnungseinheit CALC und dem Datenspeicher MEM ist in der Figur 3 zur besseren Übersicht nicht gezeigt.

Das Generatormodul 200 umfasst zudem eine Auswahleinheit, die dazu eingerichtet ist, eine Vielzahl der erfassten Produkte anzuzeigen, nämlich mit der Anzeige DISP, wobei über eine bzw. die Eingabeschnittstelle IN ein Produkt aus der Vielzahl von erfassten Produkten auswählbar ist, nämlich z.B. über die Steuerbefehle P_{id}, E_{id}, und eine Generatoreinheit GEN zum Erzeugen des Emissionsnachweises EN, wobei der Emissionsnachweis wenigstens einen Teil der Produktdaten P_{Data,i} des ausgewählten und erfassten Produktes P_{Data,i}(P_{id}) aufweist und den aktuellen Produktemissionswert Gᵢ des ausgewählten und erfassten Produktes P_{Data,i}(P_{id}).

Wie in der Figur 3 zu erkennen ist, geht in den Block GEN ein Pfeil ein, der seinen Ursprung im Block IN hat, der die Eingabeschnittstelle veranschaulicht, und veranschaulicht, wie ein individueller Nachweis pro Produkt erstellt wird.

Die zur Figur 1 und 2 beschriebenen Erläuterungen treffen analog auf die Figur 3 zu. Im Unterschied zu der Figur 1 und 2 ist in der Figur 3 eine Generatoreinheit GEN gezeigt, die den Emissionsnachweises EN erzeugt.

Vorzugsweise kann der Emissionsnachweis CO₂ Ausgleichsmaßnahmen umfassen.

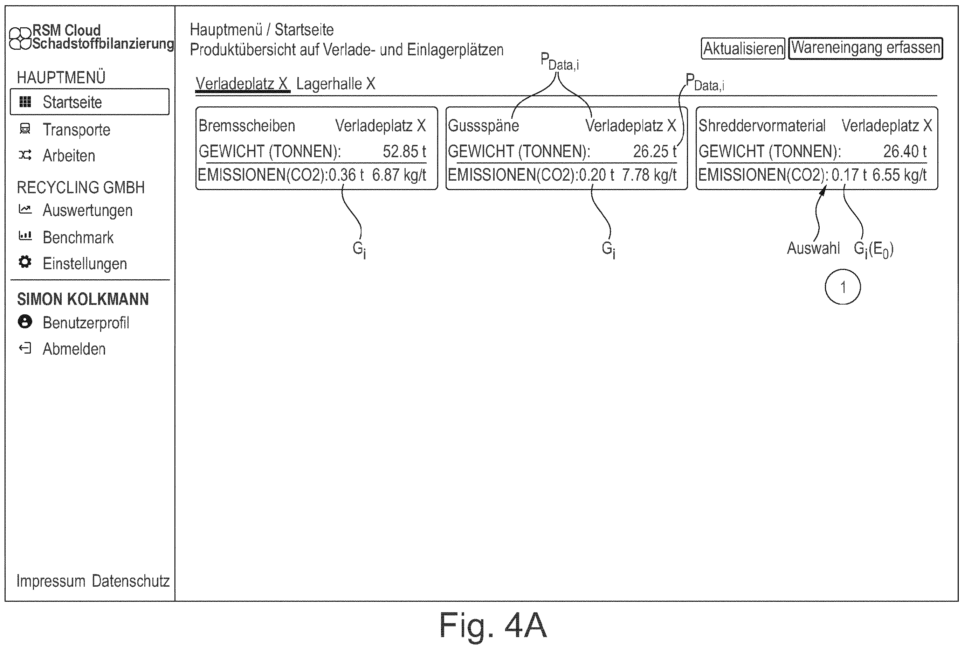

In der Figur 4A bis 8 wird ein Überwachungssystem 100 in einer Ausführungsform als Cloud Computing System gezeigt.

Die Figuren 4A bis 4E veranschaulichen eine Berechnung eines berechneten Emissionswertes mit einer Berechnungseinheit CALC, mit einem Berechnungsalgorithmus, nämlich einem Verarbeitungsalgorithmus.

In der Figur 4A wird eine Produktübersicht gezeigt. Das Überwachungssystem 100 ist somit mit einer Anzeige DISP ausgebildet, um eine Vielzahl von erfassten Produkten darzustellen, nämlich mit den jeweiligen individuellen Produktemissionswerten Gᵢ. Als erfasste Produkte sind Bremsscheiben, Gussspäne sowie Schreddervormaterial erfasst. Wie zu erkennen ist, sind den drei erfassten Produkten Produktdaten zugeordnet, nämlich eine Gewichtsangabe in Tonnen sowie ein Ablageort, nämlich der Verladeplatz X. Jedem erfassten Produkt ist ein individueller Produktemissionswert Gᵢ zugeordnet.

In einem ersten Schritt, der in der Figur 4A dargestellt ist, kann ein erfasstes Produkt in einer Produktübersicht ausgewählt werden, beispielsweise das Schreddervormaterial.

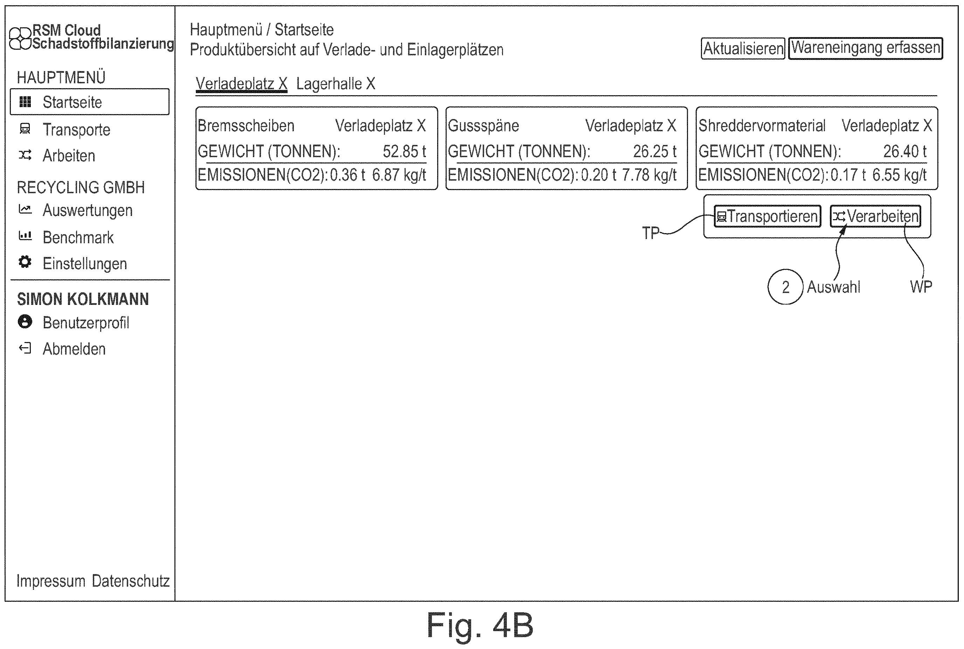

In einem zweiten Schritt, der in der Figur 4B dargestellt ist, kann über eine angezeigte Auswahl zwischen einem Aufruf eines Transportalgorithmus TP oder einem Verarbeitungsalgorithmus WP ausgewählt werden.

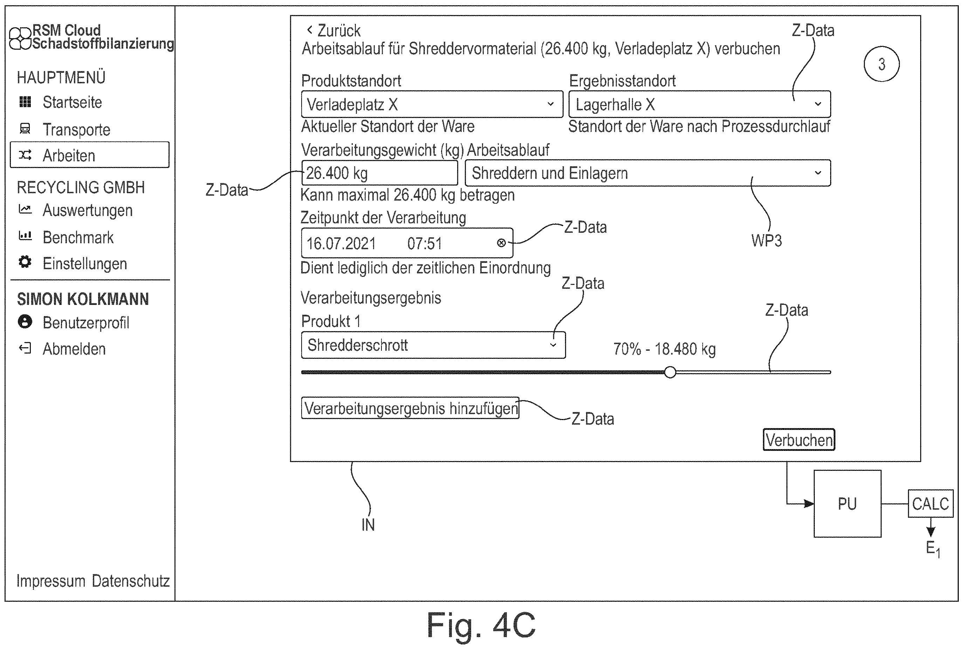

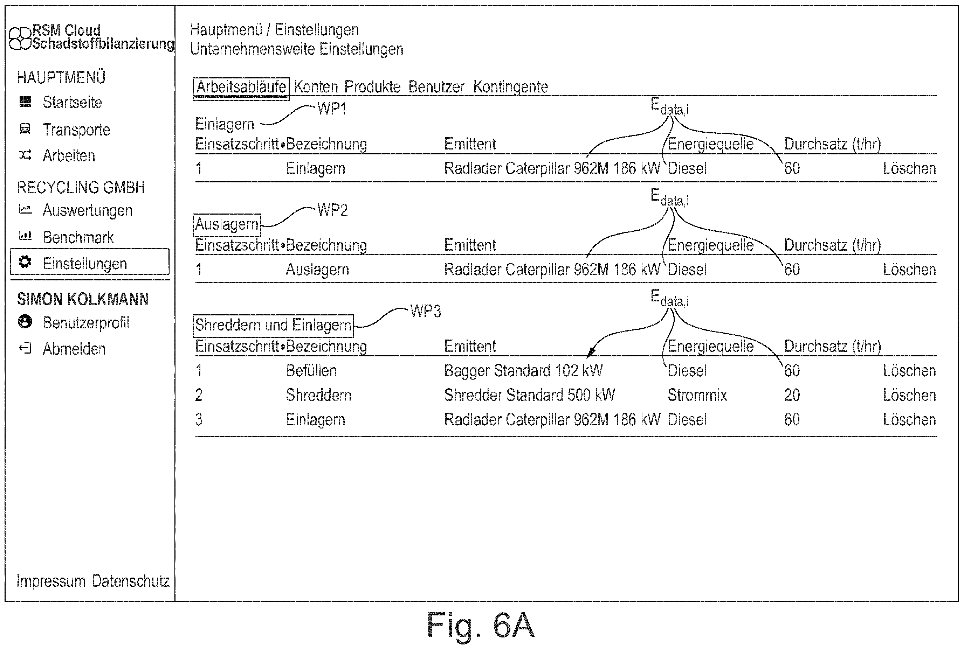

Wird die Auswahl Verarbeiten ausgewählt, wird in einem dritten Schritt, der in der Figur 4C dargestellt ist, eine Eingabemaske zum Eingeben von Zusatzdaten aufgerufen. Die Zusatzdaten z-Data umfassen einen Ergebnisstandort, ein Verarbeitungsgewicht, ein Zeitpunkt der Verarbeitung, ein Verarbeitungsergebnis, sowie eine Verlustangabe. Zudem ist eine Auswahl eines hinterlegten Arbeitsablaufes WP3 bereitgestellt. Der Arbeitsablauf WP3 bzw. der Algorithmus ist in einer Datenbank hinterlegt, wie beispielsweise in der Figur 6A gezeigt. Die gezeigte Eingabemaske ist also eine manuelle Eingabeschnittstelle IN. Die Fig. 4C zeigt also indirektes Auswählen des erfassten Produktes und/oder des Treibhausgasemittenten über eine bzw. die Eingabeschnittstelle, indem ein hinterlegter und auswählbarer Berechnungsalgorithmus von der Berechnungseinheit ausgeführt wird, wobei in dem hinterlegten und auswählbaren Berechnungsalgorithmus ein Aufruf eines in einer Produktdatenbank erfassten Produktes festgelegt ist und/oder ein Aufruf eines in einer Emittentendatenbank erfassten Treibhausgasemittenten festgelegt ist.

Auf Basis dieser Zusatzdaten sowie den Produktdaten P_{Data,i} sowie den Emittendendaten E_{Data,i} berechnet die Berechnungseinheit CALC einen Emissionswert E₁, was schematisch in der Figur 4C durch die weiteren Blöcke PU und CALC dargestellt ist.

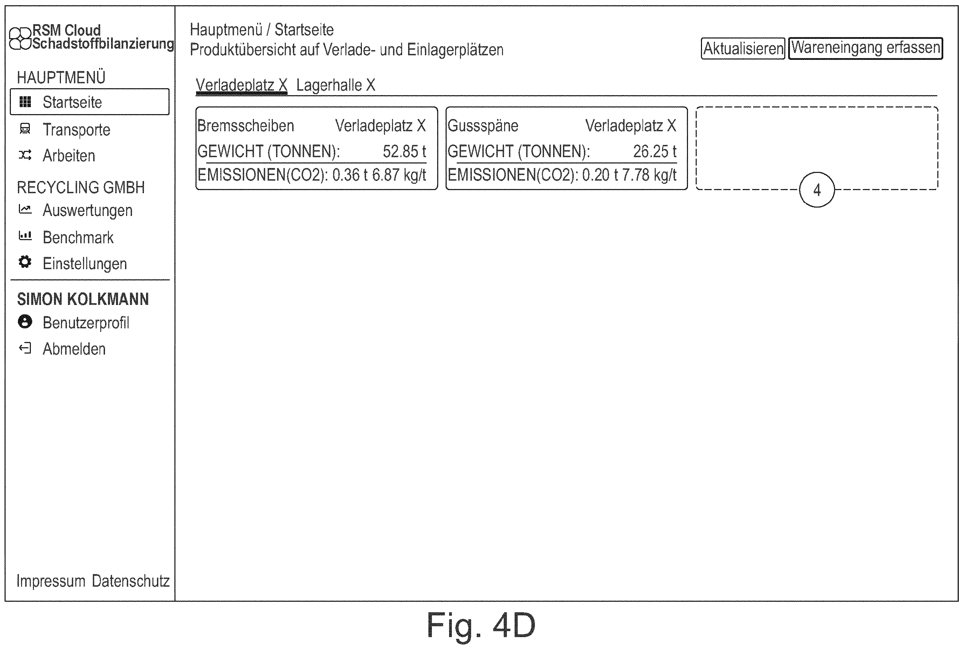

Da eingestellt wurde, dass das Schreddervormaterial zu einem anderen Ort geliefert wird, nämlich zur Lagerhalle X, wird das Schreddervormaterial nicht mehr in der Produktübersicht dargestellt, die in der Figur 4D dargestellt ist, da die Produktübersicht des Verladeplatzes X ausgewählt ist.

Demnach wird vorzugsweise vorgeschlagen, erfasste Produkte kategorisiert anzuzeigen.

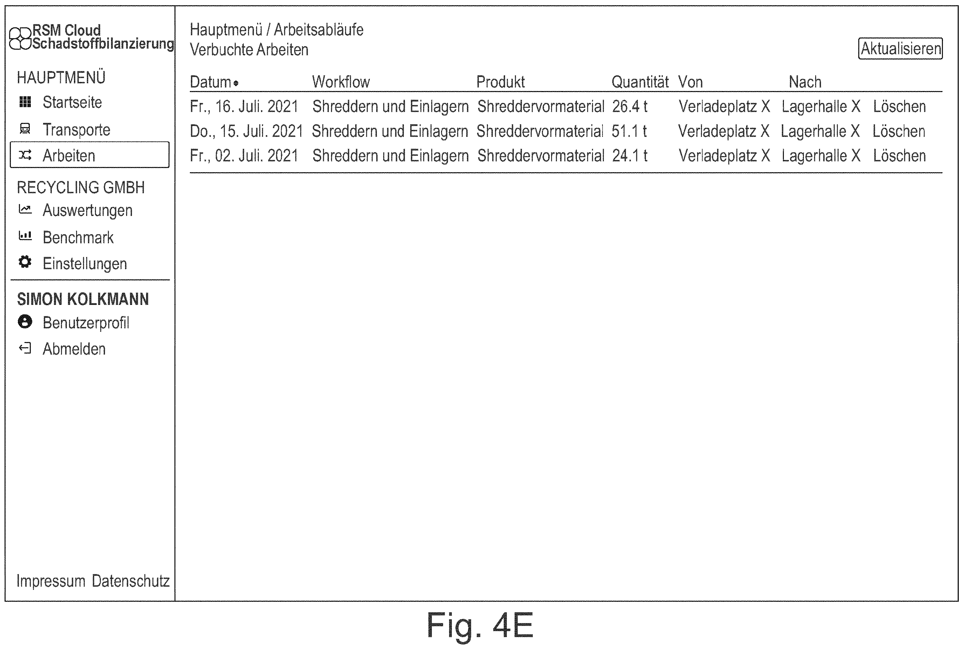

Zudem umfasst das System eine Übersicht der verbuchten Verarbeitungen eines erfassten Produktes, insbesondere wie in der Figur 4E gezeigt.

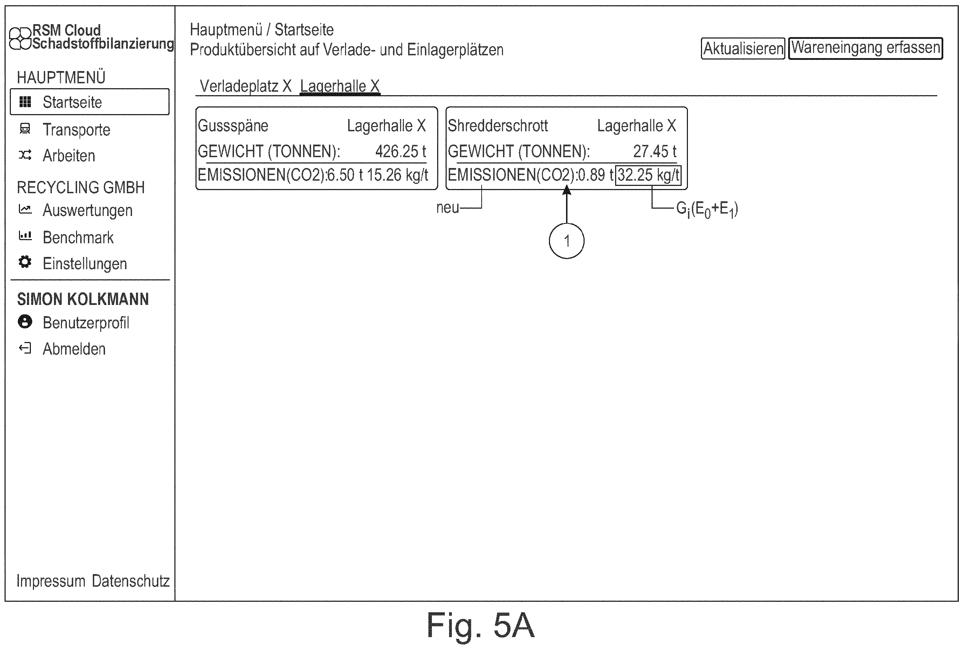

Durch die Verarbeitung des Schreddervormaterial zu Schredderschrott hat das System automatisiert ein Neuprodukt Schredderschrott in die Produktübersicht eingefügt, wie in der Figur 5A dargestellt ist. Dort ist ein Neuprodukt Schredderschrott automatisiert durch die Berechnungseinheit CALC eingefügt worden. Der Produktemissionswert Gi(Eo+Ei) des Schredderschrotts entspricht also der Summe des Produktemissionswertes Gᵢ(Eᵢ) des Schreddervormaterials sowie des mit der Berechnungseinheit CALC berechneten Emissionswertes E₁, der bei der Verarbeitung des Schreddervormaterials entstanden ist.

Die Figuren 5A bis 5F veranschaulichen eine Berechnung eines berechneten Emissionswertes mit einer Berechnungseinheit CALC, mit einem Berechnungsalgorithmus, nämlich einem Transportalgorithmus.

In einem ersten Schritt, der in der Figur 5A dargestellt ist, kann ein erfasstes Produkt in einer Produktübersicht ausgewählt werden, beispielsweise das Produkt Schredderschrott.

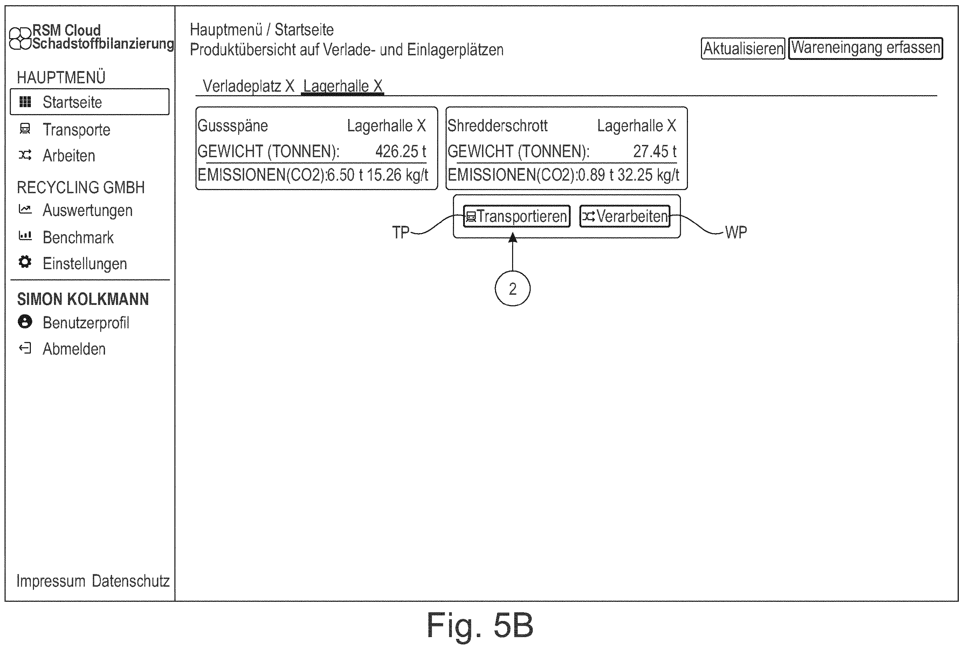

In einem zweiten Schritt, der in der Figur 5B dargestellt ist, kann über eine angezeigte Auswahl zwischen einem Aufruf eines Transportalgorithmus TP oder einem Verarbeitungsalgorithmus WP ausgewählt werden.

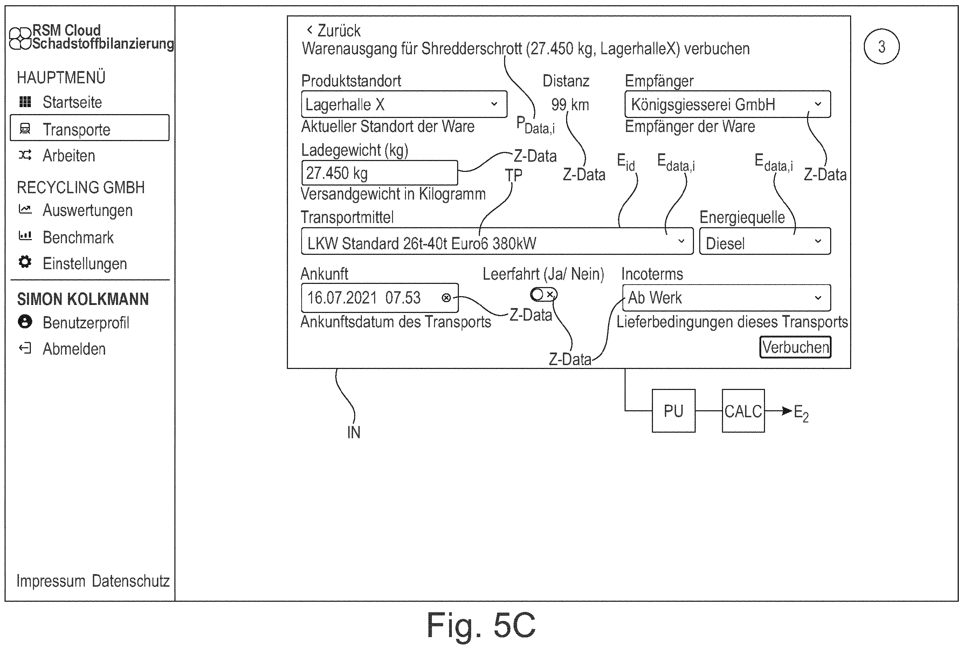

Wird die Auswahl Transportieren ausgewählt, wird in einem dritten Schritt, der in der Figur 5C dargestellt ist, eine Eingabemaske zum Eingeben von Zusatzdaten aufgerufen. Die Zusatzdaten z-Data umfassen ein Empfänger, eine Distanz zwischen dem Produktstandort und einem Empfänger, wobei die Distanz vorzugsweise automatisch bestimmt wird, ein Ladegewicht, eine geplante Ankunft, ein Leerfahrtsindikator, und Lieferbedingungen.

Zudem ist eine Auswahl eines hinterlegten Transportalgorithmus bereitgestellt, der einen Zugriff auf die Emittentendankbank in Abhängigkeit von E_{id} ausführt. Die gezeigte Eingabemaske ist also eine manuelle Eingabeschnittstelle IN.

Auf Basis dieser Zusatzdaten sowie den Produktdaten P_{Data,i} sowie den Emittendendaten E_{Data,i} berechnete die Berechnungseinheit CALC einen Emissionswert E₂, was schematisch in der Figur 5C durch die weiteren Blöcke PU und CALC dargestellt ist.

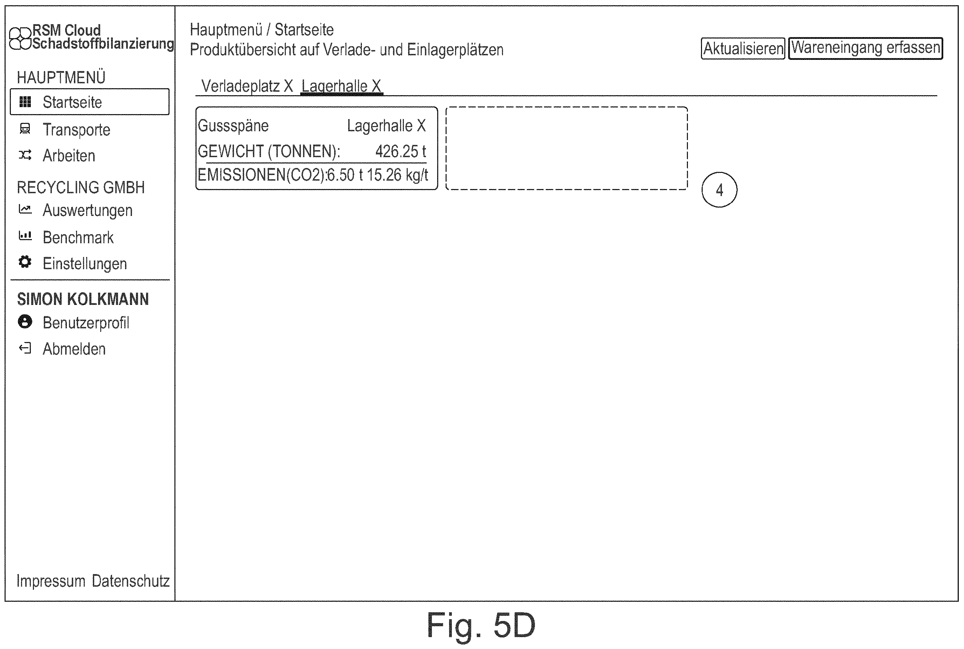

Da eingestellt wurde, dass der Schredderschrott zu einem anderen Ort geliefert wird, nämlich zu einem anderen Lieferanten (Königsgiesserei), wird der Schredderschrott nicht mehr in der Produktübersicht dargestellt, die in der Figur 5D dargestellt ist.

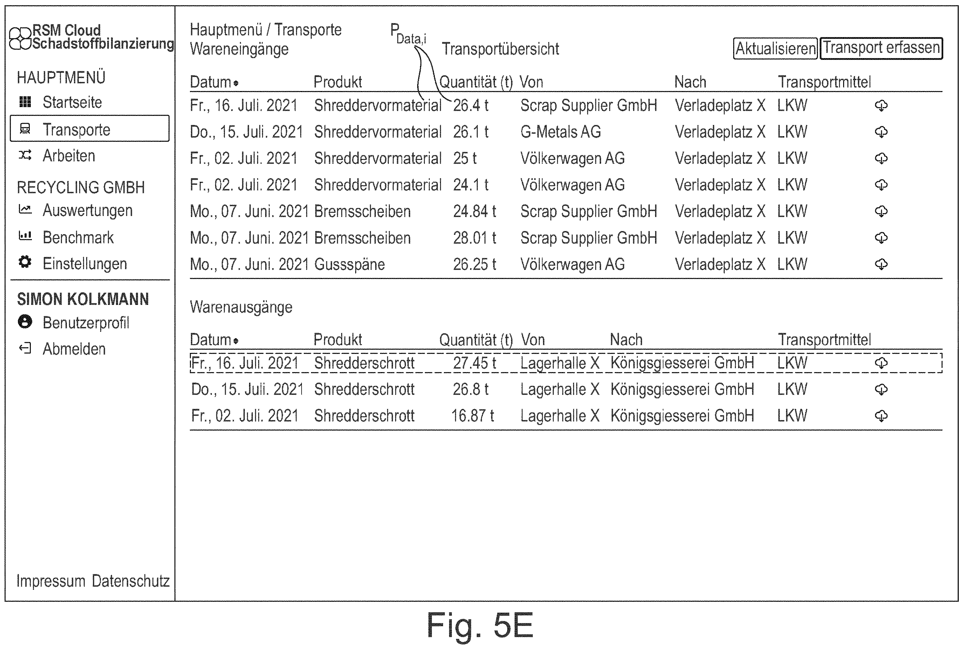

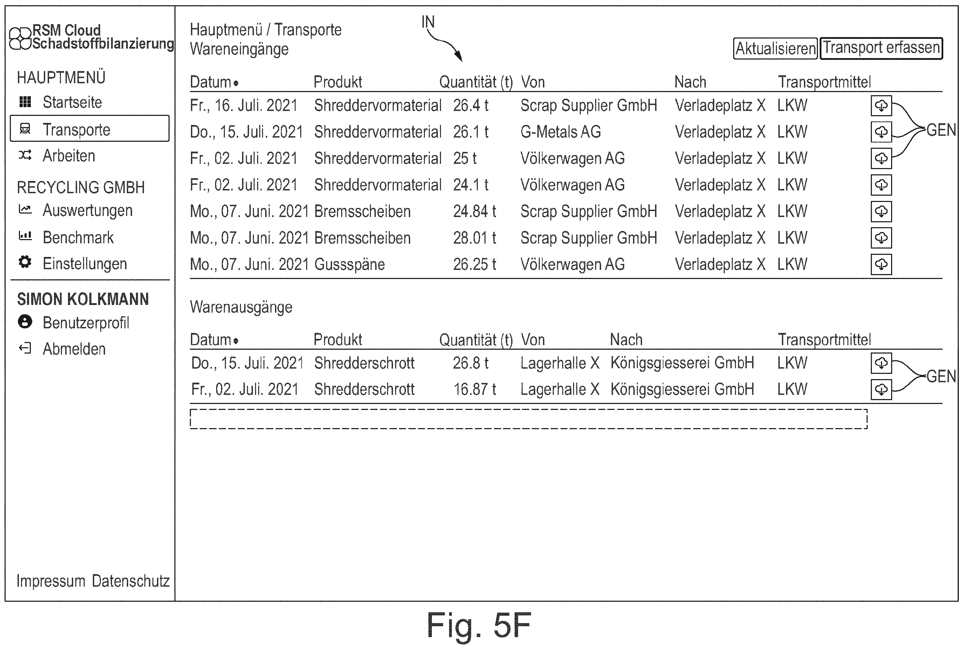

Zudem umfasst das System eine Übersicht der Wareneingänge und Warenausgänge der erfassten Produkte, insbesondere wie in der Figur 5E und 5F gezeigt. Die Figur 5E zeigt dabei die Situation, bevor der zuvor beschriebene Transportprozess ausgeführt wurde. Wie zu erkennen ist, ist der in der Figur 5E hervorgehobene Schredderschrott in der Figur 5F nicht mehr dargestellt.

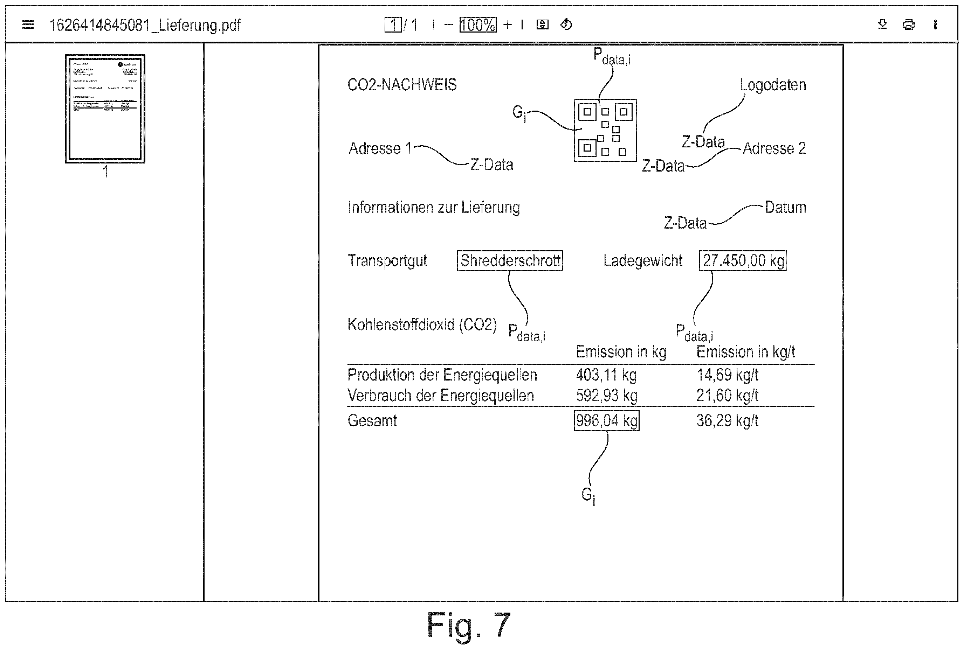

Die Figur 5F veranschaulicht zudem, dass das vorgeschlagene Überwachungssystem ein Generatormodul zum Erzeugen und/oder Ausgeben mehrerer individueller Emissionsnachweise EN für ein ausgewähltes und erfasstes Produkt umfasst, was schematisch durch die Blöcke GEN veranschaulicht ist. Wird einer der auswählbaren Blöcke GEN ausgewählt, erzeugt das Generatormodul einen individuellen Emissionsnachweis EN für ein ausgewähltes und erfasstes Produkt, wie beispielsweise in der Figur 7 dargestellt.

Vorzugsweise weist das Überwachungssystem und/oder das Generatormodul eine Datenbank auf, in der eine Vielzahl von Verarbeitungsalgorithmen hinterlegt sind oder hinterlegbar sind, wie beispielsweise in der Figur 6A gezeigt. Wie der Figur 6A zu entnehmen ist, sind drei Verarbeitungsalgorithmen hinterlegt. Wie der Figur 6A ebenfalls zu entnehmen ist, sind in den gezeigten Algorithmen auch Emittendendaten festgelegt, also ein Zugriff auf eine Emittendendatenbank festgelegt.

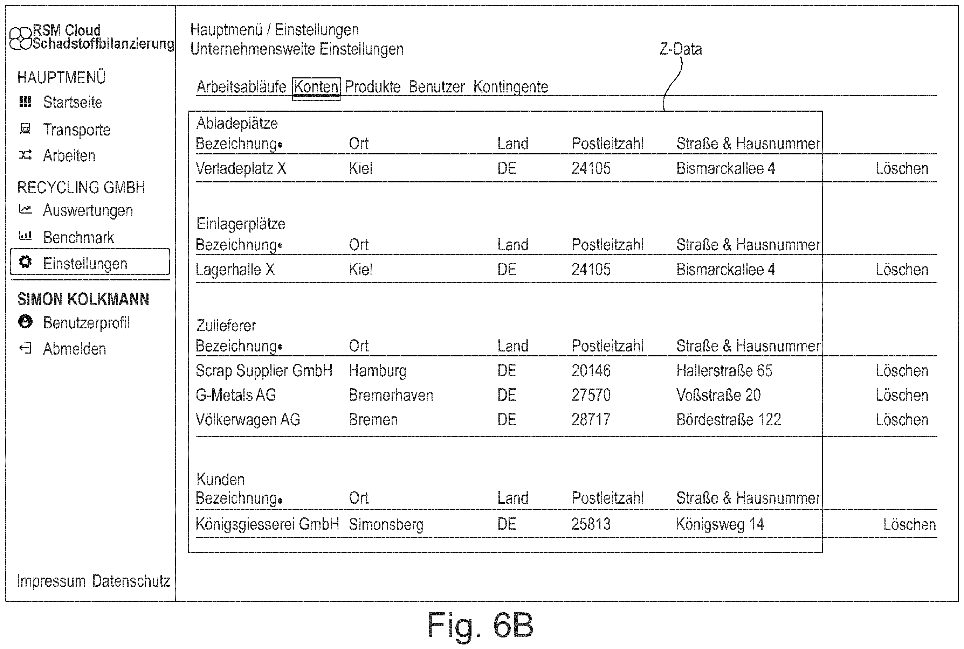

Vorzugsweise weist das Überwachungssystem und/oder das Generatormodul eine weitere Datenbank auf, in der eine Vielzahl von Zusatzdaten hinterlegt ist oder hinterlegbar ist, wie beispielsweise in der Figur 6B gezeigt. Wie der Figur 6B zu entnehmen ist, sind Zusatzdaten in Form der Ablageorte und Einlagerplätze, Zulieferer und Kunden hinterlegt.

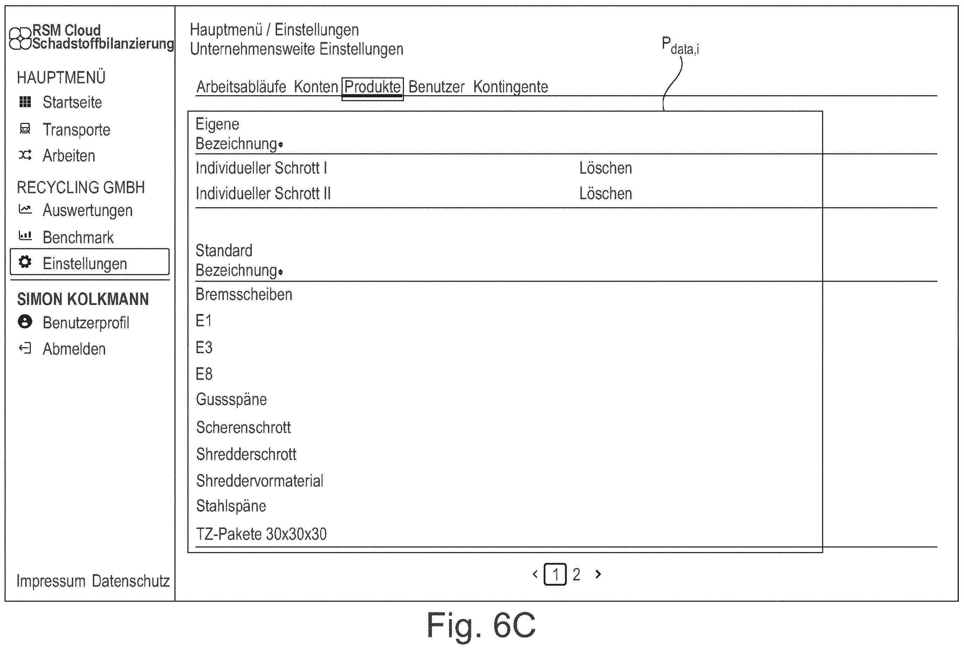

Vorzugsweise weist das Überwachungssystem und/oder das Generatormodul eine Produktdatenbank auf, in der eine Vielzahl von erfassten Produkte hinterlegt ist oder hinterlegbar ist, wie beispielsweise in der Figur 6C gezeigt. Wie der Figur 6B zu entnehmen ist, können so eigene individuelle Produkte erfasst werden oder Standardprodukte hinterlegt sein. Dies ist vorteilhaft, da eine Neueingabe von gleichartige Produkten vereinfacht wird.

In der Figur 7 ist beispielhaft ein Emissionsnachweis EN gezeigt. Der Emissionsnachweis umfasst wenigstens einen Teil der erfassten Produktdaten P_{Data,i} sowie einen individuellen Produktemissionswert Gᵢ, beispielhaft für das Produkt Schredderschrott.

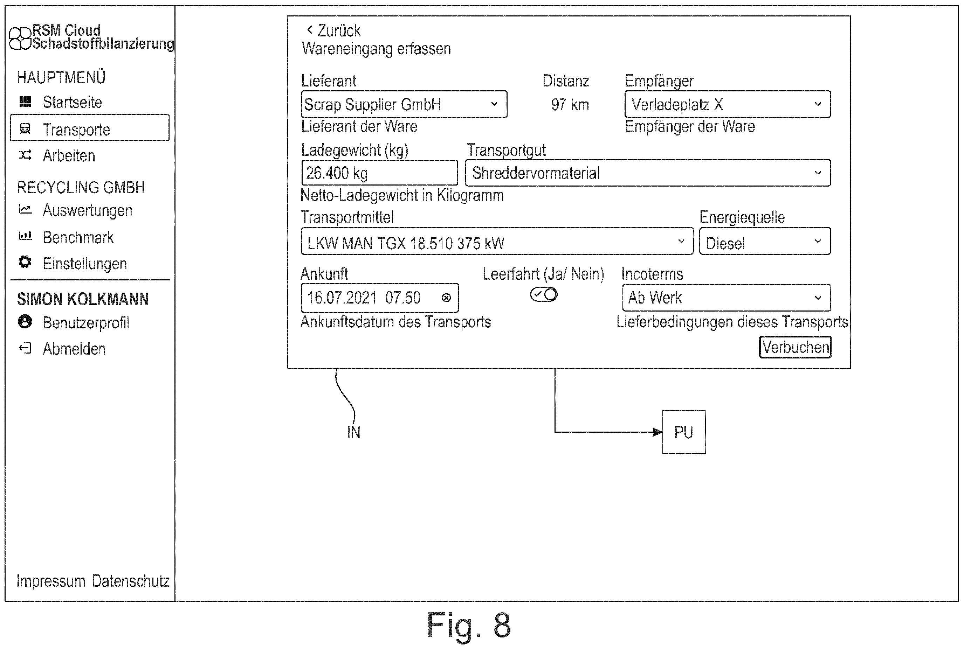

Die Figur 8 zeigt eine Eingabeschnittstelle IN zum Erfassen von Produktdaten eines körperlichen Produktes, um jedes körperliche Produkt individuell durch die Produktdaten als ein erfasstes Produkt digital abzubilden. Die Eingabeschnittstelle IN ist als manuelle Eingabeschnittstelle ausgebildet, in die ein Nutzer des Überwachungssystems händisch in einer Eingabemaske die Produktdaten hinterlegt. Die so eingegebenen Daten werden der Verarbeitungseinheit PU bereitgestellt.

Die vorliegende Erfindung weist demnach die folgenden Vorteile auf:
- Es wird eine Möglichkeit zur Auswertung nach Schadstoffen, nach Industrien, nach Regionen, nach Bearbeitungsschritten, bereitgestellt und diese auch ausgeführt.
- Mittels der hinterlegten Daten können auch CO₂-Prognosen erstellt werden, die einen Anreiz für Optimierungen geben und Level aufzeigen, die mit (zukünftigen) Vorgaben abgeglichen werden können.
- Es können Branchen-Benchmarks automatisiert erzeugt werden, die ebenso einen Anreiz für Optimierungen geben können.
- Es können Simulationen gefahren werden, über welchen Weg der geringste CO₂-Verbrauch vorliegt.
- Es wird ein CO₂-Ausweis erstellt, der ähnlich dem Energieausweis zeigt, wie CO₂-freundlich das Unternehmen, der Bereich ist.
- Durch die Ein-und Auslagerung werden CO₂-Anteile der jeweiligen Haufwerke ermittelt, die dann bei der Auslagerung als Durchschnittswert verwendet werden.
- Ein CO₂-Nachweis kann separat gedruckt werden oder als QR-Code auf den Lieferschein und/oder die Rechnung beigefügt werden.
- Weiterhin kann Klimaneutralität sichergestellt werden, indem das System dem Nutzer mitteilt, dass weitere Ausgleichsmaßnahmen eingeleitet werden müssen, wenn die Ausgleichsmaßnahmen durch die Emissionen übertroffen werden, so kann eine neutrale Emissionsbilanz erreicht werden.

## Patentansprüche

1. System zur Überwachung (100) emittierter Treibhausgasemissionen umfassend:
- eine Eingabeschnittstelle (IN) zum Erfassen von Produktdaten (P_{Data,i}) eines körperlichen Produktes, um jedes körperliche Produkt individuell durch die Produktdaten als ein erfasstes Produkt digital abzubilden, wobei jedem erfassten Produkt ein individueller Produktemissionswert (Gᵢ) zugeordnet ist, und
- der Produktemissionswert (Gᵢ) veränderbar ausgebildet ist, und
- der Produktemissionswert (Gᵢ) ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet;
- eine Verarbeitungseinheit (PU), eingerichtet zum Empfangen, Speichern und Verändern der erfassten Produkte; und
- eine Berechnungseinheit (CALC) zum Berechnen eines Emissionswertes (Eᵢ) eines Treibhausgasemittenten, wobei der berechnete Emissionswert einem realen Emissionswert entspricht, den ein körperlicher Treibhausgasemittent bei einem Transport oder einer Verarbeitung des körperlichen Produktes erzeugt, wobei die Berechnungseinheit (CALC) dazu eingerichtet ist, den Emissionswert (Eᵢ) zu berechnen aus
(i) erfassten Produktdaten eines ausgewählten erfassten Produktes (P_{Data,i}(P_{id})) und
(ii) aus bereitgestellten Emittentendaten eines ausgewählten Treibhausgasemittenten (E_{Data,i}(E_{id})), wobei die Emittentendaten einen körperlichen Treibhausgasemittenten digital abbilden,
wobei die Verarbeitungseinheit (PU) dazu eingerichtet ist, den Produktemissionswert (Gᵢ) des ausgewählten Produktes mit dem berechneten Emissionswert (Eᵢ) zu aktualisieren, um einen individuellen und aktuellen Produktemissionswert (Gi(Ei)) für jedes erfasste Produkt bereitzustellen.

2. Überwachungssystem (100) nach Anspruch 1, wobei
- die bereitgestellten Emittentendaten in einer Emittentendatenbank (110) bereitgestellt sind, und vorzugsweise in der Emittentendatenbank (110)
- zeitbasierte Treibhausgasemittenten digital erfasst und abgebildet sind, die zeitbasiert Treibhausgasemissionen bei einer Verarbeitung des körperlichen Produktes erzeugen, insbesondere Verarbeitungsanlagen, wie z.B. Schrottpressen, Schredder oder Trennungsanlagen; und/oder
- distanzbasierte Treibhausgasemittenten digital erfasst und abgebildet sind, die distanzbasiert Treibhausgasemissionen bei einem Transport des körperlichen Produktes erzeugen, insbesondere LKWs, Schiffe, Güterzüge; und/oder
- festwertbasierte Treibhausgasemittenten digital erfasst und abgebildet sind, dem ein fester Emissionswert zugeordnet ist.

3. Überwachungssystem nach Anspruch 1 oder 2, wobei
- die Verarbeitungseinheit (PU) dazu eingerichtet ist, die Produktdaten des ausgewählten Produktes nach der Berechnung des Emissionswertes zu aktualisieren, insbesondere eine Produktmenge des erfassten Produkts aktualisiert, und/oder
- die Verarbeitungseinheit (PU) dazu eingerichtet ist, ein Neuprodukt als erfasstes Produkt automatisiert den erfassten Produkten hinzuzufügen, wobei das Neuprodukt durch individuelle Produktdaten gekennzeichnet ist und ein individueller Produktemissionswert zugeordnet ist, um ein verarbeitetes körperliches Produkt den erfassten Produkten hinzuzufügen, das in einem Verarbeitungsprozess mit dem Treibhausgasemittenten verarbeitet wurde.

4. Überwachungssystem nach einem der vorstehenden Ansprüche, wobei
die Verarbeitungseinheit zur optischen Überwachung emittierter Treibhausgasemission mit einer optischen Anzeige ausgebildet ist, wobei die optische Anzeige dazu eingerichtet ist, den jeweils zugeordneten und aktualisierten Produktemissionswert mehrerer erfasster Produkte optisch anzuzeigen, vorzugsweise aller erfassten Produkte anzuzeigen, insbesondere um eine optische Überwachung mehrerer Produktemissionswerte bereitzustellen.

5. Überwachungssystem nach einem der vorstehenden Ansprüche, wobei
- die Berechnungseinheit zum Berechnen des Emissionswertes einen hinterlegten und auswählbaren Transportalgorithmus (TP) und/oder Verarbeitungsalgorithmus (WP) ausführt, wobei die Algorithmen wenigstens abhängig sind von den erfassten Produktdaten des ausgewählten erfassten Produktes und den bereitgestellten Emittentendaten des ausgewählten Treibhausgasemittenten; und/oder
- die Berechnungseinheit eine Datenschnittstelle aufweist, um aktuelle Betriebsdaten eines Treibhausgasemittenten zu empfangen und/oder gespeicherte Betriebsdaten eines Treibhausgasemittenten aus einer bzw. der Emittentendatenbank zu empfangen.

6. Überwachungssystem nach einem der vorstehenden Ansprüche, wobei
das Überwachungssystem zudem eine Generatoreinheit (GEN) zum Erzeugen und/oder Ausgeben eines individuellen Emissionsnachweises (EN) für ein ausgewähltes und erfasstes Produkt aufweist, wobei der Emissionsnachweis wenigstens einen Teil der Produktdaten des ausgewählten und erfassten Produktes und/oder den aktuellen Produktemissionswert des ausgewählten und erfassten Produktes umfasst.

7. Überwachungssystem nach Anspruch 6, wobei
der Emissionsnachweis (EN) einen dekodierbaren Code aufweist oder ein dekodierbarer Code ist, insbesondere einen QR-Code oder einen Barcode, und wobei vorzugsweise in dem Code wenigstens ein Teil der Produktdaten und der Produktemissionswert kodiert ist.

8. Überwachungssystem nach einem der vorstehenden Ansprüche, wobei
- die Eingabeschnittstelle (IN) als eine manuelle Eingabeschnittstelle ausgebildet ist, wobei eine manuelle Eingabeschnittstelle eine Eingabeschnittstelle ist, in der ein Benutzer manuell Daten erfasst, insbesondere die Produktdaten oder den Produktemissionswert, und/oder
- die Eingabeschnittstelle (IN) als eine automatisierte Eingabeschnittstelle ausgebildet ist, wobei eine automatisierte Eingabeschnittstelle eine Eingabeschnittstelle ist, in der ein Benutzer mit einem Produktscanner automatisiert Daten erfasst, insbesondere die Produktdaten oder den Produktemissionswert.

9. Überwachungssystem nach einem der vorstehenden Ansprüche, wobei
das Überwachungssystem (100) zudem ein Simulationsmodul (SIM) zur Bestimmung eines minimierten Produktemissionswert umfasst, wobei
- das Simulationsmodul dazu eingerichtet ist, den minimierten Produktemissionswert mit einem Optimierungsalgorithmus zu bestimmen, wobei der Optimierungsalgorithmus den minimierten Produktemissionswert in Abhängigkeit der Produktdaten und der Emittendendaten bestimmt, und/oder
- das Simulationsmodul dazu eingerichtet ist, einen Vorschlag anzuzeigen mit welchem Treibhausgasemittent oder welchen Treibhausgasemittenten der bestimmte und minimierte Produktemissionswert erreicht wird, und/oder
- das Simulationsmodul dazu eingerichtet ist, einen Vorschlag anzuzeigen mit welchem Lieferant oder welchen Lieferanten der bestimmte und minimierte Produktemissionswert erreicht wird.

10. Überwachungssystem nach einem der vorstehenden Ansprüche, wobei
das Überwachungssystem zudem eine Score-Berechnungseinheit aufweist, die zur Bestimmung eines Emittenten-Score für jeden Treibhausgasemittenten eingerichtet ist, wobei der Emittenten-Score zur Kennzeichnung der emittierten Treibhausgasemissionen der Treibhausgasemittenten eingerichtet ist, und insbesondere der Emittenten-Score mit einer mehrstufigen Skala ausgebildet ist, und insbesondere der Emittenten-Score individuell den einzelnen Treibhausgasemittenten zugeordnet ist.

11. Überwachungssystem nach einem der vorstehenden Ansprüche, wobei die Produktdaten wenigstens umfassen:
- eine Produktbezeichnung des erfassten Produkts, insbesondere eine eindeutige Typenbezeichnung,
- eine Produktmenge des erfassten Produkts, insbesondere eine Gewichtsangabe oder eine Stückzahlangabe,
- eine Ortsangabe des erfassten Produkts, die einen Lagerort des Produktes anzeigt, und/oder
- Materialdaten.

12. Überwachungssystem nach einem der vorstehenden Ansprüche, wobei die Emittentendaten wenigstens umfassen:
- eine eindeutige und/oder eine generische Treibhausgasemittentenbezeichnung,
- Verbrauchsdaten des Treibhausgasemittenten,
- eine Ortsangabe des Treibhausgasemittenten, der einen Standort des Treibhausgasemittenten anzeigt,
- Routendaten,
- Kapazitätsdaten des Treibhausgasemittenten, die eine Auslastung oder Aufnahmekapazität des Treibhausgasemittents für das Produkt anzeigen, und/oder
- Lieferantendaten
und insbesondere
die zeitbasierten Treibhausgasemittenten, die distanzbasierten Treibhausgasemittenten und/oder die lieferungsbasierten Treibhausgasemittenten durch die Emittentendaten digital erfasst und abgebildet sind.

13. Überwachungssystem nach einem der vorstehenden Ansprüche, wobei
jedes erfasste Produkt einem Cluster zuordbar ist, und eine Clusterberechnungseinheit dazu eingerichtet ist, einen Clusteremissionswert zu bestimmen, der einem Gesamtwert der individuellen Produktemissionswerten der dem Cluster zugeordneten erfassten Produkten entspricht, und
vorzugsweise eine Vergleichseinheit dazu eingerichtet ist, eine Vielzahl von Clusteremissionswerten unterschiedlicher Cluster zu vergleichen, und
weiter vorzugsweise die Vergleichseinheit dazu eingerichtet ist, ein Cluster mit dem niedrigsten Clusteremissionswert zu kennzeichnen und/oder mehrere Cluster entsprechend ihres Clusteremissionswertes zu sortieren oder kategorisieren.

14. Generatormodul (200) zum Erzeugen und/oder Ausgeben eines individuellen Emissionsnachweises (EN) für ein ausgewähltes und erfasstes Produkt (P_{Data,i}(P_{id})) zur Überwachung emittierter Treibhausgasemission, wobei das Generatormodul (200) vorzugsweise Teil des Überwachungssystems (100) nach einem der Ansprüche 1 bis 13 ist, das Generatormodul umfassend:
- eine Eingabeschnittstelle (IN) zum Erfassen von Produktdaten eines körperlichen Produktes, um jedes körperliche Produkt individuell durch die Produktdaten als ein erfasstes Produkt digital abzubilden, wobei jedem erfassten Produkt (P_{Data,i}) ein individueller Produktemissionswert (Gᵢ) zugeordnet ist, und
- der Produktemissionswert veränderbar (Gᵢ) ausgebildet ist, und
- der Produktemissionswert (Gᵢ) ein Gesamtwert ist, der einem Gesamtwert real erzeugter Treibhausgasemissionen entspricht, die von einem oder mehreren Treibhausgasemittenten erzeugt wurden, wobei ein Treibhausgasemittent ein technisches Gerät ist, das das körperliche Produkt real transportiert oder verarbeitet;
- eine Berechnungseinheit (CALC) zum Berechnen eines Emissionswertes (Eᵢ) eines Treibhausgasemittenten, wobei der berechnete Emissionswert einem realen Emissionswert entspricht, den ein körperlicher Treibhausgasemittent bei einem Transport oder einer Verarbeitung des körperlichen Produktes erzeugt, wobei die Berechnungseinheit dazu eingerichtet ist, den Emissionswert zu berechnen aus
(i) erfassten Produktdaten eines ausgewählten erfassten Produktes (P_{Data,i}(P_{id})) Und
(ii) aus bereitgestellten Emittentendaten eines ausgewählten Treibhausgasemittenten (E_{Data,i}(E_{id})), wobei die Emittentendaten einen körperlichen Treibhausgasemittenten digital abbilden, und
- eine Auswahleinheit, die dazu eingerichtet ist, eine Vielzahl der erfassten Produkte anzuzeigen (DISP), wobei über eine bzw. die Eingabeschnittstelle (IN) ein Produkt aus der Vielzahl von erfassten Produkten auswählbar ist, und
- eine Generatoreinheit (GEN) zum Erzeugen des Emissionsnachweises (EN), wobei der Emissionsnachweis wenigstens einen Teil der Produktdaten (P_{Data,i}) des ausgewählten und erfassten Produktes (P_{Data,i}(P_{id})) und den aktuellen Produktemissionswert (Gᵢ) des ausgewählten und erfassten Produktes (P_{Data,i}(P_{id})) aufweist.

15. Generatormodul (200) nach Anspruch 14, wobei
der Emissionsnachweis (EN) einen dekodierbaren Code aufweist, insbesondere einen QR-Code oder einen Barcode, und wobei vorzugsweise in dem Code wenigstens ein Teil der Produktdaten (P_{Data,i}) und der Produktemissionswert (Gᵢ) kodiert ist.
